(19) Europäisches Patentamt
European Patent Office
Office européen des brevets

(11) **EP 2 695 780 B1**

(12) **EUROPÄISCHE PATENTSCHRIFT**

(45) Veröffentlichungstag und Bekanntmachung des Hinweises auf die Patenterteilung:
**10.01.2018   Patentblatt 2018/02**

(21) Anmeldenummer: **10005591.2**

(22) Anmeldetag: **27.11.2008**

(51) Int Cl.:
*B60T 17/08* (2006.01)      *F16D 55/224* (2006.01)
*F16D 65/14* (2006.01)      *F16D 65/28* (2006.01)
*F16D 121/02* (2012.01)      *F16D 121/12* (2012.01)
*F16D 123/00* (2012.01)      *F16D 125/40* (2012.01)
*F16D 125/58* (2012.01)      *F16D 125/68* (2012.01)
*F16D 127/04* (2012.01)      *F16D 125/64* (2012.01)
*F16D 125/66* (2012.01)

(54) **Kombizylinder mit klinkenbetätigter Notlöseeinrichtung für die Feststellbremse**

Combination cylinder with bolt action emergency release device for parking brake

Cylindre combiné doté d'un dispositif de libération d'urgence actionné par cliquet pour un frein de stationnement

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **06.12.2007   DE 102007058670**

(43) Veröffentlichungstag der Anmeldung:
**12.02.2014   Patentblatt 2014/07**

(62) Dokumentnummer(n) der früheren Anmeldung(en) nach Art. 76 EPÜ:
**08856683.1 / 2 219 918**

(73) Patentinhaber: **KNORR-BREMSE Systeme für Schienenfahrzeuge GmbH 80809 München (DE)**

(72) Erfinder:
• **Kraus, Harry-Werner**
  **81825 München (DE)**
• **Ostler, Armin**
  **80469 München (DE)**
• **Fuderer, Erich**
  **82256 Fürstenfeldbruck (DE)**
• **Mathieu, Michael**
  **82178 Puchheim (DE)**
• **Ebner, Christian**
  **86161 Augsburg (DE)**

(74) Vertreter: **Mattusch, Gundula Knorr-Bremse AG, Patentabteilung V/RG Moosacher Strasse 80 80809 München (DE)**

(56) Entgegenhaltungen:
EP-A- 0 553 450      FR-A- 2 757 122
US-A- 3 994 206      US-A1- 2005 179 315

**Beschreibung**

Stand der Technik

Die vorliegende Erfindung betrifft einen Kombizylinder beinhaltend einen Betriebsbremszylinder als aktive Betriebsbremse mit wenigstens einem druckmittelbetätigten Betriebsbremskolben, welcher über eine Betriebsbremskolbenstange einen Bremsmechanismus betätigt, sowie einen Federspeicherbremszylinder als passive Feststellbremse mit einem gegen die Wirkung wenigstens einer Speicherfeder druckmittelbetätigten Federspeicherbremskolben, wobei der Federspeicherbremskolben im Feststellbremsfall die Kraft der wenigstens einen Speicherfeder auf die Betriebsbremskolbenstange überträgt, nach dem Oberbegriff von Anspruch 1.

In heutigen Schienenfahrzeugen sind die Platzverhältnisse in den Drehgestellen sehr beengt. Insbesondere in Drehgestellen von Hochgeschwindigkeitszügen müssen bis zu vier Bremsscheiben auf einer Achse angeordnet werden. Weiterhin ist der Bauraum für die Bremsen durch Antriebsaggregate oder Spurstangen von Magnetschienenbremsen oft eingeschränkt. Diese Probleme treten besonders dann zutage, wenn sog. Kombizylinder, in welchen ein druckmittelbetätigter Betriebsbremszylinder als Betriebsbremse und ein Federspeicherbremszylinder als passive Feststellbremse aneinander geflanscht sind, als Drehgestellbremsen verwendet werden, weil solche Kombizylinder relativ viel Bauraum beanspruchen und größer bauen als Betriebsbremszylinder ohne Federspeicherbremszylinder.

Unter einer aktiven Bremse wird im allgemeinen eine Bremse verstanden, welche bei Druckbeauschlagung zuspannt und bei einer Druckverringerung löst. Dies ist in den meisten Fällen die Betriebsbremse. Bei einer passiven Bremse wie einer Federspeicherbremse als Feststellbremse wird hingegen die Bremskraft durch die Speicherfeder erzeugt, wobei bei Druckbeaufschlagung des Federspeicherbremszylinders dieser gegen die Wirkung der Speicherfeder in Bremslösestellung gedrängt und bei einer Druckverringerung durch die Wirkung der Speicherfeder in Zuspannstellung gebracht wird.

Um das Wegrollen von abgestellten Schienenfahrzeugen zu verhindern, muss die Feststellbremse eine entsprechend hohe Bremskraft auch ohne externe Energieversorgung sicherstellen. Es werden für diese Aufgabe Federspeicherbremszylinder mit Speicherfedern eingesetzt, welche die für die Feststellbremse erforderliche Bremskraft mittels der Federkraft der Speicherfedern aufbringen. Die Speicherfedern werden durch Belüften einer Federspeicherbremskammer vorgespannt. Wird die Federspeicherbremskammer entlüftet, so stützt sich die Federkraft der Speicherfedern an den Hebeln der Bremszange ab und erzeugt so die Anpresskraft auf die Bremsbeläge.

Wenn ein derart feststellgebremstes Schienenfahrzeug abgeschleppt werden soll, so steht oftmals keine Druckluftversorgung für das Schienenfahrzeug zur Verfügung, mit deren Hilfe die als Federspeicherbremse ausgebildete Feststellbremse pneumatisch gelöst werden kann. Für diesen Fall muss die Feststellbremse mittels einer mechanischen Notlöse- oder Hilfslöseeinrichtung ausgestattet sein, durch die die Feststellbremse von Hand, d.h. ohne Nutzung von Fremdenergie gelöst werden kann. Die Notlöseeinrichtung wird in der Praxis auch dazu genutzt, um beim Bremsbelagwechsel die Bremszange kraftfrei zu stellen, da ein Wechseln der Bremsbeläge bei lediglich pneumatisch gelöster Feststellbremse zu unsicher ist, weil ein ungewolltes Zuspannen der Federspeicherbremse durch Druckabfall ein zu hohes Sicherheitsrisiko für das Servicepersonal darstellt.

Die Notlöseeinrichtung sollte auch so ausgebildet sein, dass nach einem mechanischen Lösen der Federspeicherbremse die volle Bremsfunktion wieder zur Verfügung steht, sobald die Federspeicherbremskammer mit dem einem Mindest-Lösedruck beaufschlagt wird (automatische Wiederbereitschaft).

Aus der EP 0 072 404 B1 ist ein Federspeicherbremszylinder bekannt, in dem zwei ineinander geschachtelte Federn auf einen koaxialen Federspeicherbremskolben wirken. Im Kolbenrohr befindet sich ein Mutterngewinde, welches mit einem Spindelgewinde der Kolbenstange im Eingriff ist. Der Gewindespindeltrieb ist nicht selbsthemmend. Wird der Federspeicherzylinder entlüftet, so drücken die Federn über den Kolben und Kolbenstange auf den Kolben des Betriebszylinders. Wird über das Gewinde eine Axialkraft übertragen, so entsteht zwischen dem Mutterngewinde im Kolben und dem Spindelgewinde ein Drehmoment, welches abgestützt werden muss. Dazu ist auf der Spindel eine Kupplungshülse verschieblich aber drehfest (z.B. mit Keilwellenprofil) angeordnet, welche mittels einer Schlingfeder mit einem am Kolben fest angeschraubten Rohrstück in Richtung des Gewindemoments drehfest gekoppelt ist. Zum Notlösen wird das hackenförmige Ende der Schlingfeder mittels der geschlitzten Kupplungshülse in der Richtung verdreht, in der die Windungen aufgeweitet werden. Dabei verschraubt sich die Spindel im Kolben und dreht damit die Kupplungshülse, so dass die Schlingfeder von der anderen Seite wieder zugezogen wird. Zum vollständigen Abbau der Bremskraft muss die Kupplungshülse entsprechend weit gedreht werden.

Nachteilig bei dieser Art der Notlösebetätigung ist, dass sie langsam wirkend ist und einen sehr langen Betätigungsweg erfordert. Eine Fernbetätigung, um die Notlöseeinrichtung z.B. von der Seite des Fahrzeuges aus zu bedienen, ist daher nur sehr aufwändig zu realisieren.

Die EP 0944512 B1 offenbart einen gattungsgemäßen Kombizylinder mit einem Federspeicherbremszylinder, in dem mehrere Federn sternförmig angeordnet sind und mit zwei in Reihe angeordneten Federspeicherbremskolben zusammen wirken. Das Kolbenrohr eines der beiden Federspeicherbremskolben ist mit einem Muttergewinde versehen, welches in das Gewinde einer rohrförmigen Spindel eingreift. Werden die beiden Federspeicherbremszylinder entlüftet, so stützt sich die Federkraft über das Gewinde des einen Federspeicherbremskolbens auf der Spindel ab. Diese wiederum leitet die Kraft über ihre Stirnseite auf das Kolbenrohr des Betriebsbremskolbens und den darin untergebrachten Nachstellmechanismus weiter und von dort auf die Bremszange.

Das durch die Federkraft entstehende Gewindemoment wird zum einen vom Federspeicherbremskolben mit dem Muttergewinde über zwei Führungsbolzen im Zwischenboden des Federspeicherbremszylinders abgestützt. Zum anderen wird das auf die Spindel wirkende Drehmoment durch einen Riegel im Zylindergehäuse abgestützt, der in eine Längsnut im Spindelrohr eingreift und in einer Bohrung im Zylindergehäuse geführt ist. Während des Bremshubs gleitet der Riegel unter anwachsendem Drehmoment in der Nut der Spindel. Wird der Riegel zum Notlösen des Federspeichers aus der Nut der Spindel gezogen und damit die Abstützung des Spindelmoments unterbrochen, verschraubt sich die Spindel so weit im Federspeicherbremskolben nach rechts bis sie auf Anschlag am Zwischenboden und der Federspeicherbremskolben auf Anschlag am Zylinderboden geht. Dabei geht der Betriebsbremskolben in Lösestellung und die Bremse ist kraftfrei.

Nachteilig bei dieser Anordnung der Drehmomentsabstützung ist, dass bei jedem Bremshub des Federspeichers eine Gleitbewegung zwischen dem Riegel und Spindelnut unter Kraft stattfindet und somit ein gewisser Verschleiß an den Kontaktflächen auftritt.

Dokument US 3,994,206A offenbart einen Kombizylinder nach dem Oberbegriff des Anspruchs 1.

Es ist daher Aufgabe der vorliegenden Erfindung, einen Kombizylinder der eingangs erwähnten Art derart weiterzubilden, dass er einen geringeren Verschleiß aufweist.

Diese Aufgabe wird durch die Merkmale von Anspruch 1 gelöst.

Offenbarung der Erfindung
Die Erfindung schlägt vor, die vom Federspeicherbremskolben erzeugte Feststellbremskraft in einen drehfest gelagerten, koaxial zu einer Mittelachse des Kombizylinders betätigbaren Druckring einzuleiten, welcher Axialkräfte auf einen Spindeltrieb ausübt und eine Axialkraftübertragung zwischen dem Spindeltrieb und der Betriebsbremskolbenstange vorgesehen ist, wobei ein Teil des Spindeltriebs drehfest und ein anderes Teil des Spindeltriebs koaxial zu einer Mittelachse des Kombizylinders drehbar gelagert ist und die Drehbewegung des drehbaren Teils des Spindeltriebs mittels einer lösbaren Drehsperre zur Axialkraftübertragung zwischen dem drehfesten Teil und dem drehbaren Teil sperrbar und zur Aufhebung dieser Axialkraftübertragung entsperrbar ist, und wobei die Drehsperre eine in eine Außenverzahnung des drehbaren Teils des Spindeltriebs eingreifbare, handbetätigte Klinke beinhaltet, welche am Druckring drehbar gelagert ist und die lösbare Drehsperre von einer Notlöseeinrichtung zum Notlösen der Feststellbremse umfasst ist, und die lösbare Drehsperre im Normalbetrieb gesperrt und zum Notlösen der Feststellbremse gelöst wird.

Unter Notlösen wird ein mechanisches Lösen der Federspeicherbremse verstanden, wenn die Druckluftversorgung gestört ist und folglich der Federspeicherbremskolben nicht mehr durch Druckmittelbetätigung in die gelöste Stellung verfahren werden kann.

Wenn zum Notlösen der Feststellbremse die Drehsperre derart betätigt wird, dass sich das drehbare Teil des Spindeltriebs gegenüber dem drehfesten Teil über das bevorzugt nicht selbsthemmende Getriebe frei drehen kann, verschraubt sich das drehbare Teil gegenüber dem drehfesten Teil des Spindeltriebs, bis beide Teile zueinander kraftfrei sind. Dabei bewegt sich der Federspeicherbremskolben bis zum Anschlag am Boden des Federspeicherbremszylinders.

Das durch die Kraft der Speicherfedern der Federspeicherbremse erzeugte Drehmoment wird auf diese Weise auf einem sehr kurzen Strecke zwischen dem drehbaren Teil und dem drehfesten Teil des Spindeltriebs abgestützt. Wenn die Feststellbremse zugespannt wird, so führen der Federspeicherbremskolben, der Spindeltrieb, der Druckring sowie die Klinke gemeinsam den Bremshub aus, ohne dass ein Drehmoment abzustützen wäre. Insbesondere sind keine verschleißgefährdeten Gleitflächen vorhanden.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt ist die Klinke um eine Achse parallel zur Mittelachse des Kombizylinders schwenkbar ausgebildet und durch Drücken eines im Kombizylinder verschieblich gelagerten Druckstifts aus der Außenverzahnung des drehbaren Teils des Spindeltriebs aushebbar.

Zum Notlösen der Feststellbremse wird dann die Drehsperre gelöst, wobei sich das drehbare Teil des Spindeltriebs gegenüber dem drehfesten Teil des Spindeltriebs über das Gewinde verschraubt und sich der Federspeicherbremskolben bis zu einem Anschlag an einem Boden des Federspeicherbremszylinders und der Betriebsbremskolben von einer Rückholfeder getrieben sich zusammen mit dem drehbaren Teil des Spindeltriebs in eine Lösestellung bewegt.

Bevorzugt ist beim Notlösen der Feststellbremse die Klinke durch Einfallen eines Arretierungsstifts in ausgehobener Stellung haltbar. Wie beim Stand der Technik ist der Federspeicherbremskolben durch Druckbeaufschlagung einer Federspeicherbremskammer in Lösestellung drängbar. Gemäß einer Weiterbildung der Erfindung wird dabei der Druckring mitgenommen und der Arretierungstift ausgehoben, wodurch die Klinke wieder in die Außenverzahnung des drehbaren Teils des Spindeltriebs eingreift und dadurch die Drehsperre wieder sperrt. Damit ist die Notlöseeinrichtung so ausgebildet, dass nach dem Notlösen der Federspeicher- oder Feststellbremse wieder die volle Bremsfunktion zur Verfügung steht, sobald die Federspeicherbremskammer mit dem einem Mindest-Lösedruck beaufschlagt wird.

Gemäß einer Variante überträgt der Druckring die Axialkraft über ein Axialdrucklager auf ein das drehbare Teil des Spindeltriebs bildendes Zahnrad, in dessen Verzahnung die Klinke der Drehsperre eingreifbar ist, wobei das Zahnrad auf dem drehfesten Teil des Spindeltriebs über das Gewinde drehbar gelagert ist, welches die Axialkraft auf die Betriebsbremskolbenstange überträgt.

Alternativ sind der Druckring und das drehfeste Teil des Spindeltriebs zusammengefasst und die Drehsperre zwischen dem Druckring und dem drehbaren Teil des Spindeltriebs angeordnet.

Besonders bevorzugt ist die vom Federspeicherbremskolben erzeugte Feststellbremskraft in den Druckring mittels eines kraftübersetzenden Getriebes einleitbar.

Gemäß einer Weiterbildung sind an dem Druckring zwei in Bezug auf die Mittelachse exzentrische Getriebe derart vorgesehen sind, dass sich Drehmomente um eine Achse senkrecht zur Mittelachse kompensieren.

Insbesondere ist das kraftübersetzende Getriebe derart ausgebildet, dass die Bewegungen des Federspeicherbremskolbens und der Betriebsbremskolbenstange koaxial sind und zur Realisierung einer annähernd konstanten Speicherfederkraft an der Betriebsbremskolbenstange über dem gesamten Hub des Federspeicherbremskolbens die Kraftübersetzung mit steigendem Hub des Federspeicherbremskolbens größer wird.

Aufgrund der ersten Maßnahme nimmt die vertikale Erstreckung des Kombizylinders ab, weil der Betriebsbremszylinder und der Federspeicherbremszylinder koaxial aneinander geflanscht werden können. Dies ist insofern günstig als insbesondere der vertikale Bauraum in Drehgestellen stark eingeschränkt und noch eher Platz in horizontaler Richtung vorhanden ist.

Die zweite Maßnahme bedingt eine Kraftzunahme mit steigendem Hub des Federspeicherbremskolbens, was zu einer vorteilhaft hohen Feststellbremskraft in der Endlage des Federspeicherbremskolbens und damit im zugespannten Zustand der Federspeicherbremse führt. Dann wird die mit dem Hub des Federspeicherkolbens an sich sinkende Speicherfederkraft durch die steigende Kraftübersetzung des Getriebes kompensiert. Bei geeigneter Auslegung des Getriebes kann daher eine annähernd konstante und hohe Speicherfederkraft an der Betriebskolbenstange über dem gesamten Hub des Federspeicherkolbens realisiert werden.

Gemäß einer Weiterbildung ist an dem Druckring wenigstens ein senkrecht zur Mittelachse des Kombizylinders angeordneter Lagerzapfen ausgebildet, an dem wenigstens ein Winkelhebel schwenkbar gelagert ist, der mit seinem einen Hebelarm am Federspeicherbremskolben angelenkt und mit seinem anderen Hebelarm an einer festen Stützfläche des Kombizylinders derart abgestützt ist, dass bei einer Betätigung des Federspeicherbremskolbens im Festbremsfall eine Drehung des abgestützten Winkelhebels um den Lagerzapfen und damit eine gleichgerichtete Betätigung des Druckrings ausgelöst wird. Ein solcher Winkelhebel bildet dann ein Hebelgetriebe aus, wobei sich die jeweilige Übersetzung aus der momentanen Lage des Winkelhebels bzw. der Hebelarme des Winkelhebels ergibt.

Die im Feststellbremsfall vom Federspeicherbremskolben erzeugte Feststellbremskraft wird folglich über den Winkelhebel als Getriebe in den Druckring eingeleitet und dadurch verstärkt. Vom Druckring wird diese verstärkte Kraft über das sperrbare Gewinde in den Spindeltrieb und von dort über das Drucklager in das Betriebsbremskolbenrohr und schließlich in ein Spindeljoch eingeleitet, dessen Hub letztlich diese verstärkte Kraft in einen Bremsmechanismus einleitet, vorzugsweise in eine Bremszange einer Scheibenbremse eines Schienenfahrzeugs.

Wenn nun zwei an sich senkrecht zur Mittelachse des Kombizylinders nach au-ßen erstreckenden Lagerzapfen des Druckrings drehbar gelagerte Winkelhebel vorgesehen sind, welche in Bezug zu einer die Mittelachse des Kombizylinders enthaltenden Ebene zueinander umgeschlagen angeordnet sind (d.h. die Lage des einen Winkelhebels ergibt sich aus einer Drehung des anderen Winkelhebels um 180 Grad um die Mittelachse, punktsymmetrische Anordnung), so heben sich die Reaktionsmomente, welche von dem als Hebel wirkenden Abstand der Winkelhebel von der Mittelachse herrühren, auf, so dass in vorteilhafter Weise kein Drehmoment auf den Druckring bzw. auf den Federspeicherbremskolben um eine Achse senkrecht zur Mittelachse (Kippmoment) wirkt.

Vorzugsweise ist jeweils ein Hebelarm eines Winkelhebels mittels einer doppelt angelenkten Zuglasche mit dem Federspeicherbremskolben verbunden und je ein anderer Hebelarm eines Winkelhebels mittels einer auf der festen Stützfläche abrollbaren Stützrolle abgestützt, wodurch der Verschleiß minimiert wird.

Um den Druckring im Kombizylinder definiert drehfest, aber axial beweglich zu führend, tragen die Lagerzapfen des Druckrings endseitig Gleitkörper, welche in sich in Richtung der Mittelachse des Kombizylinders erstreckenden Kulissen drehfest geführt sind.

Die Stützfläche für die abrollbaren Stützrollen des anderen Arme der Winkelhebel sind bevorzugt an einer Trennwand zwischen dem Federspeicherbremszylinder und dem Betriebsbremszylinder ausgebildet, welche ohnehin vorhanden ist, so dass keine weiteren Bauteile notwendig sind. Denn diese Trennwand bildet gleichzeitig eine Stützfläche für die wenigstens eine Speicherfeder des Federspeicherbremszylinders.

Gemäß einer weiteren Variante des erfindungsgemäßen Kombizylinders ist durch den Federspeicherbremskolben wenigstens eine Keilkontur parallel zur Mittelachse des Kombizylinders betätigbar, an welcher ein Hebelarm wenigstens eines am Kombizylinder drehbar gelagerten Hebels entlang führbar ist, dessen anderer Hebelarm sich am Druckring abstützt, wobei ein Entlangführen des einen Hebelarms des Hebels an der Keilkontur eine Drehbewegung des Hebels um eine Hebeldrehachse und damit durch den anderen Hebelarm eine auf den Druckring wirkende, in Bezug zur Bewegung des Federspeicherzylinders gleich gerichtete Axialkraft hervorruft. Dabei ist beispielsweise die Hebeldrehachse des Hebels senkrecht zur Mittelachse des Kombizylinders angeordnet.

Gemäß einer Weiterbildung dieser Maßnahme sind bevorzugt zwei, den Druckring in Richtung der Drehachse des Hebels gesehen wenigstens teilweise umfassende Keilkonturen vorgesehen sind, welche mit zwei, zur Mittelachse des Kombizylinders symmetrischen und zu einem Doppelhebel zusammengefassten Hebeln zusammen wirken. Wegen der zwei Hebel ergibt sich eine bessere Lastverteilung. Zum andern ist die Lastverteilung symmetrisch.

Wenn sich folglich der Federspeicherbremszylinder im Festbremsfall in Zuspannrichtung bewegt, werden die beiden Keilkonturen mitbewegt, wodurch die einen Hebelarme der Drehhebel an den Keilkonturen entlangbewegt werden und damit eine Drehbewegung der Drehhebel auslösen, wodurch die anderen Hebelarme der Drehhebel den Druckring in eine in Bezug zur Bewegung des Federspeicherbremskolbens gleich gerichtete Axialbewegung versetzen. Der drehfest im Kombizylinder gelagerte Druckring überträgt dann die auf ihn wirkende Axialkraft durch das Axialdrucklager auf das drehende Teil des Spindeltriebs, welches aber im normalen Betrieb durch die Drehsperreinrichtung an der Drehung gegenüber dem drehfesten Teil des Spindeltriebs gehindert ist. Vom drehfesten Teil des Spindeltriebs wird dann die Axialkraft auf die Betriebsbremskolbenstange übertragen.

Gemäß einer weiteren Variante des erfindungsgemäßen Kombizylinders ist ein Kulissenmechanismus als Getriebe beinhaltend wenigstens eine am Druckring angelenkte Rollenlasche mit wenigstens einer Kulissenführung vorgesehen, in welcher wenigstens ein Kulissenhebel geführt ist, der einerseits am Gehäuse des Kombizylinders und andererseits an wenigstens einer am Federspeicherbremszylinder angelenkten Zuglasche angelenkt ist.

Die Rollenlasche ist dabei vorzugsweise an ihrem vom Druckring weg weisenden Ende mit einer drehbaren Rolle versehen, welche auf einer Kulissenfläche des Kulissenhebels abrollbar ist. Der Druckring ist beispielsweise durch wenigstens eine Gleitführung unverdrehbar im Gehäuse des Kombizylinders gelagert.

Wenn zwei Rollenlaschen mit Kulissenführungen, zwei in den Kulissenführungen geführte Kulissenhebel sowie zwei Zuglaschen vorgesehen sind, welche in Bezug zu einer die Mittelachse des Kombizylinders enthaltenden Ebene zueinander umgeschlagen angeordnet sind, dann werden von einer Betätigung des Getriebes herrührende Kippmomente kompensiert.

Wenn sich folglich der Federspeicherbremskolben im Festbremsfall in Zuspannrichtung bewegt, so stützt sich die Federkraft der Speicherfeder über die beiden Zuglaschen, die Kulissenhebel und die Rollenlaschen auf dem Druckring ab. Dieser leitet dann die Kraft auf die Betriebsbremskolbenstange und auf damit auf den Bremsmechanismus ab. Aufgrund dieser Kinematik stellt sich jeweils eine Rollenlasche automatisch auf die vom Hub des Federspeicherbremskolbens abhängige Winkellage des zugeordneten Kulissenhebels ein, denn sie nimmt die Position ein, bei der die Kraftwirkungslinie der Rollenlasche senkrecht zur Tangente der Kulissenfläche im Berührungspunkt der Stützrolle steht. Durch die kinematisch bedingte Anpassung der Lage der Rollenlaschen abhängig vom Hub des Federspeicherbremskolbens steigt die Übersetzung des dadurch gebildeten Getriebes an.

Wie bei den anderen Ausführungsbeispielen auch können durch diese Kinematik des Getriebes der Federspeicherbremszylinder und der Betriebsbremszylinder koaxial zur Mittelachse des Kombizylinders angeordnet werden, wobei die Bewegungen des Betriebsbremszylinders und des Federspeicherbremszylinders im Bremszuspann- wie im Lösefall gleichgerichtet sind.

Nicht zuletzt betrifft die Erfindung auch eine Bremszangeneinheit einer Scheibenbremse eines Schienenfahrzeugs beinhaltend einen der vorangehend beschriebenen Kombizylinder.

Genaueres wird im Rahmen der folgenden Beschreibung von Ausführungsbeispielen der Erfindung deutlich.

Zeichnung

Ausführungsbeispiele der Erfindung sind in der Zeichnung dargestellt und in der nachfolgenden Beschreibung näher erläutert. In der Zeichnung zeigt

Fig.1 eine Draufsicht einer Bremszangeneinheit eines Schienenfahrzeugs mit einem Kombizylinder gemäß der Erfindung;

Fig.2 eine vertikale Längsquerschnittsdarstellung des Kombizylinders von Fig.1 mit einem Kombizylinder gemäß einer ersten Ausführungsform in Lösestellung;

Fig.3 eine aufgebrochene perspektivische Darstellung des Kombizylinders von Fig.2;

Fig.4 eine Längsquerschnittsdarstellung des Kombizylinders von Fig.2 mit dem Kombizylinder in Zuspannstellung;

Fig.5 eine zentrale vertikale Längsquerschnittsdarstellung des Kombizylinders von Fig.2 in Lösestellung;

Fig.6 ein Diagramm, welches die Abhängigkeit der Federkraft, der Übersetzung i eines Getriebes des Kombizylinders sowie der Zylinderkraft vom Hub s eines Federspeicherkolbens des Kombizylinders gemäß der Erfindung dar-

Fig.7 eine horizontale zentrale Längsquerschnitts- darstellung eines Kombizylinders gemäß ei- ner weiteren Ausführungsform in Lösestel- lung;

Fig.8 eine aufgebrochene perspektivische Darstellung des Kombizylinders von Fig.7;

Fig.9 eine horizontale Längsquerschnittsdarstellung des Kombizylinders von Fig.7 in Bremsstellung;

Fig.10 eine vertikale zentrale Längsquerschnittsdarstellung des Kombizylinders von Fig.7;

Fig.11 eine Querschnittsdarstellung des Kombizylinders von Fig.7;

Fig.12 eine vertikale Längsquerschnittsdarstellung eines Kombizylinder gemäß einer weiteren Ausführungsform in Lösestellung;

Fig. 13 eine aufgebrochene perspektivische Darstellung des Kombizylinders von Fig.12;

Fig.14 eine vertikale Längsquerschnittsdarstellung des Kombizylinders von Fig.12 in Bremsstellung;

Fig. 15 eine horizontale zentrale Längsquerschnittsdarstellung des Kombizylinders von Fig. 12 in Lösestellung.

Beschreibung der Ausführungsbeispiele

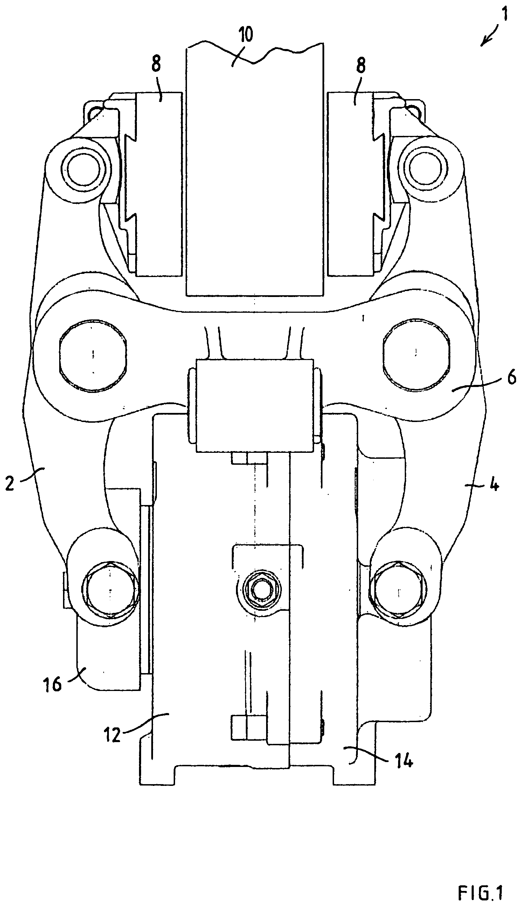

Die in Fig.1 gezeigte Bremszange 1 eines Schienenfahrzeugs weist zwei im wesentlichen parallel zueinander verlaufende Bremszangenhebel 2, 4 auf. Die beiden Bremszangenhebel 2, 4 sind im mittleren Bereich ihrer Längserstreckung durch eine Zugstange 6 gelenkig miteinander verbunden. Die Bremszangenhebel 2, 4 sowie die Zugstange 6 liegen in bzw. verlaufen parallel zu einer zur Zeichenebene parallel verlaufenden Bremszangenebene.

Die einen Enden der Bremszangenhebel 2, 4 tragen vermittels Bolzen angelenkte Bremsbacken 8, welche in eine Bremsscheibe 10 reibschlüssig eingreifen können. Zwischen den anderen Enden der Bremszangenhebel 2, 4 befindet sich ein Kombizylinder 12, dessen Gehäuse 14 an dem einen Bremszangenhebel 4 und dessen Betriebsbremskolben über eine Betriebsbremskolbenstange und ein Spindeljoch 16 am anderen Bremszangenhebel 2 angelenkt ist.

Es ist anhand von Fig.1 ersichtlich, dass die Bremszange 1 ein entsprechend der Hebelverhältnisse der Bremszangenhebel 2, 4 nur geringes Übersetzungsverhältnis aufweist, die Anpresskraft der Bremsbacken 8 also nur um einen niedrigen Übersetzungsfaktor höher als die vom Kombizylinder 12 ausübbare Spreizkraft für die Bremszangenhebel 2, 4 ist.

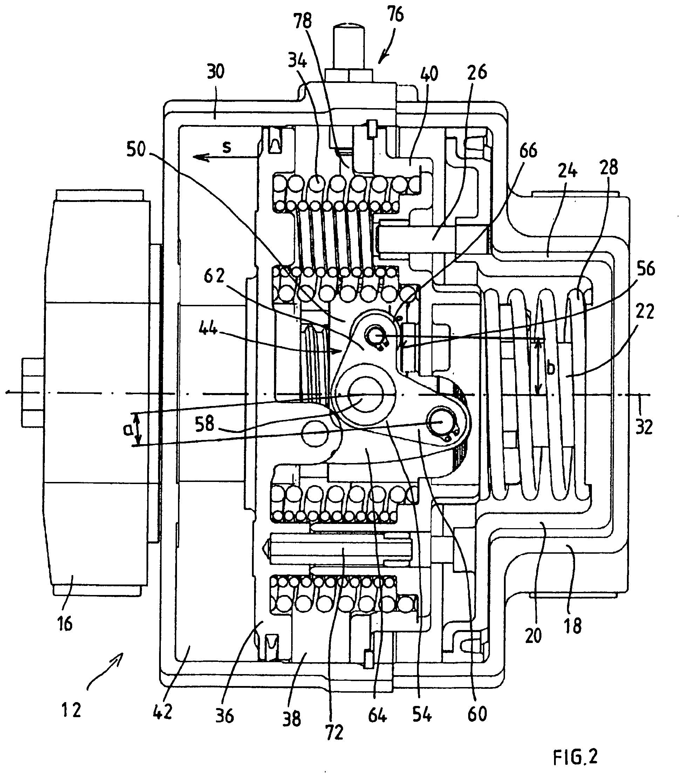

Deswegen ist in Fig.2 ein Kombizylinder 12 in Lösestellung dargestellt, mit welchem eine höhere Bremskraft im Feststellbremsfall erzielbar ist. Der Kombizylinder 12 beinhaltet einen Betriebsbremszylinder 18 als aktive Betriebsbremse mit einem druckmittelbetätigten Betriebsbremskolben 20, welcher über eine Betriebsbremskolbenstange 22 und das Spindeljoch 16 den Bremszangenhebel 2 betätigt, wobei die Druckbeauf- schlagung bzw. Druckentlastung des Betriebsbremskol- bens 20 durch Be- bzw. Entlüften einer Betriebsbremskammer 24 erfolgt. Eine Verdrehsicherung, z.B. durch einen im Kombizylinder 12 gehaltenen und im Betriebsbremskolben 20 axial geführten Bolzen 26 sorgt dafür, dass der Betriebsbremskolben 20 drehfest im Betriebsbremszylinder 18 geführt wird. Eine Rückholfeder 28 spannt den Betriebsbremskolben 20 in die in Fig.2 gezeigte, dort rechtsseitige Lösestellung vor.

Der Betriebsbremszylinder 18 ist an einen Fe- derspeicherbremszylinder 30 als passive Feststellbrem- se koaxial in Bezug zu einer Mittelachse 32 des Kombizylinders 12 angeflanscht, in welchem ein gegen die Wirkung vorzugsweise mehrerer ineinander angeordneter Speicherfedern 34 druckmittelbetätigter Federspeicherbremskolben 36 geführt ist. Die Speicherfedern 34 sind in einer Federkammer 38 des Federspeicherbremszylinders 30 untergebracht und stützen sich dabei einerseits am Federspeicherbremskolben 36 und andererseits an einer Trennwand 40 zwischen dem Federspeicherbremszylinder 30 und dem Betriebsbremszylinder 18 ab. Durch Druckbeaufschlagung einer auf der anderen Seite des Federspeicherbremskolbens 36 ausgebildeten Fe- derspeicherbremskammer 42 gelangt der Feder- speicherbremskolben 36 gegen die Wirkung der Speicherfedern 34 in die in Fig.2 gezeigte rechtsseitige Lösestellung.

Der Federspeicherbremskolben 36 überträgt im Feststellbremsfall die Kraft der Speicherfedern 34 mittels eines kraftübersetzenden Getriebes 44 auf die Betriebsbremskolbenstange 22 bzw. auf den an sie angebundenen Betriebsbremskolben 20. Von der Betriebsbremskolbenstange 22 wird die Kraft dann auf das Spindeljoch 16 und von dort auf den entsprechenden Bremszangenhebel 2 übertragen, um eine Zuspannbewegung der Bremszange 1 hervorzurufen, bei welcher die Bremsbacken 8 in reibschlüssigen Eingriff mit der Bremsscheibe 10 geraten.

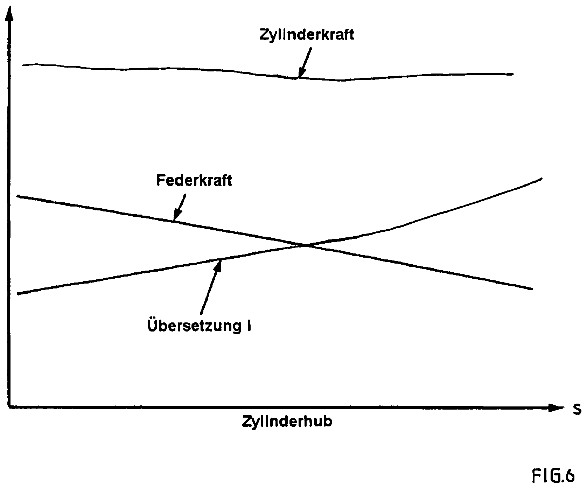

Hierbei ist das Getriebe 44 derart ausgebildet, dass die Bewegungen des Federspeicherbremskolbens 36 und des Betriebsbremskolbens 20 koaxial sind und die Kraftübersetzung i des Getriebes 44 mit steigendem Hub s des Federspeicherbremskolbens 36 größer wird, wie insbesondere die Kurve in Fig.6 veranschaulicht.

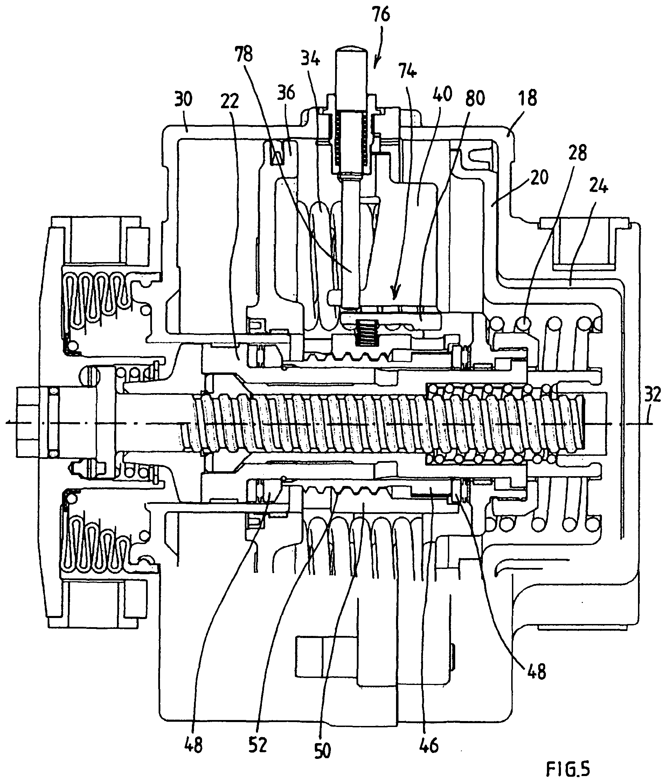

Wie aus Fig.5 hervorgeht, ragt eine Spindel 46 durch eine Durchgangsöffnung der Trennwand 40 in Richtung Betriebsbremskolben 20, von welchem sich die Betriebsbremskolbenstange 22 in Form eines Betriebsbremskolbenrohrs in das Innere der Spindel 46 derart hinein erstreckt, dass das die Spindel 46 auf dem Betriebsbremskolbenrohr 22 drehbar gelagert ist, beispielsweise durch Gleitlagerung. An radial äußeren Schultern des Betriebsbremskolbenrohres 22 sind Axialdrucklager 48 angeordnet, über welche eine Druckkraft von der Spindel 46 auf das Betriebsbremskolbenrohr 22 übertragen werden kann. Damit sind die Spindel 46 und das Betriebsbremskolbenrohr 22 bzw. der Federspeicherbremskolben 36 und der Betriebsbremskolben 20 koaxial zueinander und insbesondere in Bezug zu einer Mittelachse 32 des Kombizylinders 12 angeordnet.

Zur Realisierung der Kraftübersetzung durch das Getriebe 44 ist, wie eine Ausführungsform des Kombizylinders 12 in Fig.2 zeigt, an einem Druckring 50, in welchem die auf dem Betriebsbremskolbenrohr 22 drehbar gelagerte Spindel 46 mittels eines nicht-selbsthemmenden Gewindes 52 verschraubbar ist (siehe Fig.5), wenigstens ein Winkelhebel 54 um eine Achse senkrecht zur Mittelachse 32 des Kombizylinders 12 schwenkbar gelagert, der mit seinem einen Ende am Federspeicherbremskolben 36 angelenkt und mit seinem anderen Ende an einer festen Stützfläche 56 des Kombizylinders 12 abgestützt ist (Fig.2).

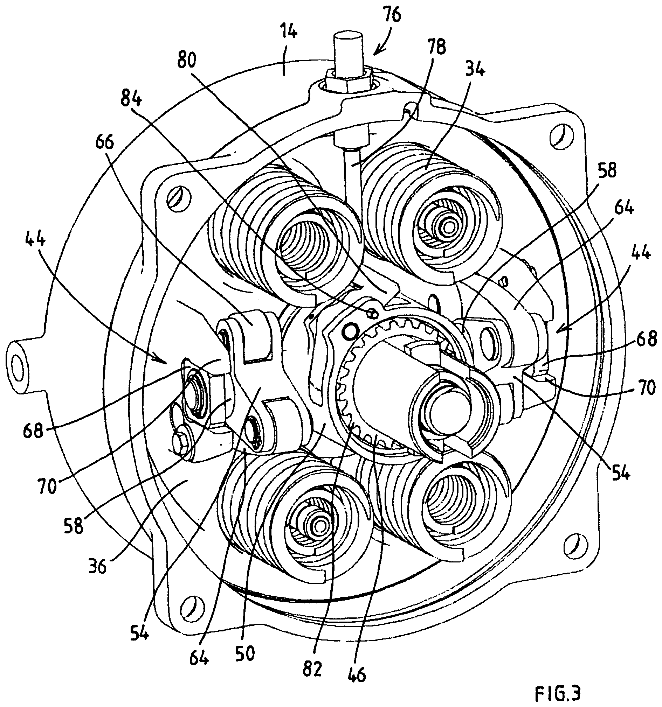

Bevorzugt sind zwei an sich senkrecht zur Mittelachse 32 des Kombizylinders 12 vom Druckring 50 nach außen erstreckenden Lagerzapfen 58 drehbar gelagerte Winkelhebel 54 vorgesehen, welche in Bezug zu einer die Mittelachse 32 enthaltenden Ebene zueinander umgeschlagen angeordnet sind, d.h., dass die Enden der Winkelhebel 54 gegenläufig angeordnet sind, wie aus Fig.3 am besten hervorgeht.

Fig.2 zeigt, dass vorzugsweise jeweils das eine Ende eines Hebelarmes 60 eines Winkelhebels 54 mittels einer doppelt angelenkten Zuglasche 64 mit dem Federspeicherbremskolben 36 verbunden und das andere Ende des anderen Hebelarmes 62 eines Winkelhebels 54 mittels einer auf der festen Stützfläche 56 abrollbaren Stützrolle 66 abgestützt ist, welche an dem anderen Hebelarm 62 des Winkelhebels 54 drehbar gelagert ist. Die Stützfläche 56 für die abrollbaren Stützrollen 66 der Winkelhebel 54 sind bevorzugt an der Trennwand 40 zwischen dem Federspeicherbremszylinder 30 und dem Betriebsbremszylinder 18 ausgebildet und der Federkammer 38 zugewandt, in welcher die Speicherfedern 34 untergebracht sind.

Um den Druckring 50 im Kombizylinder 12 drehfest, aber axial beweglich zu führen, tragen die Lagerzapfen 58 des Druckrings 50 endseitig Gleitkörper 68, welche in sich in Richtung der Mittelachse 32 des Kombizylinders 12 erstreckenden, bevorzugt im Federspeicherbremskolben 36 ausgebildeten Kulissen 70 geführt sind (Fig.3). Der Federspeicherbremskolben 36 ist wiederum durch wenigstens einen sich parallel zur Mittelachse 32 des Kombizylinders 12 erstreckenden, mit ihm fest verbundenen und in der Trennwand 40 geführten Führungsbolzen 72 im Federspeicherbremszylinder 30 gegen Verdrehen gesichert, so dass auch der Druckring 50 dort drehfest abgestützt ist.

Gegenüber dem Druckring 50, genauer in dem Druckring 50 ist die Spindel 46 mittels des durch eine lösbare Drehsperre 74 sperr- und entsperrbares nichtselbsthemmendes Gewinde 52 verschraubbar (Fig.5). Die lösbare Drehsperre 74 ist Teil einer Notlöseeinrichtung 76 zum Notlösen des Federspeicherbremszylinders 30. Unter Notlösen wird ein mechanisches Lösen der Federspeicherbremse verstanden, wenn die Druckluftversorgung gestört ist und folglich der Federspeicherbremskolben 36 nicht mehr durch Druckmittelbetätigung in die gelöste Stellung verfahren werden kann.

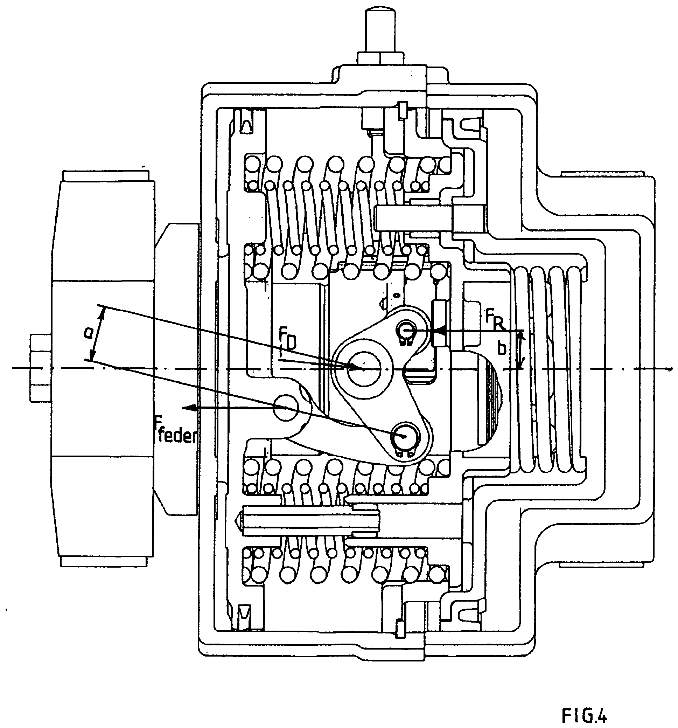

Die Winkelhebel 54 bilden dann ein Hebelgetriebe 44 aus, wobei sich die jeweilige Übersetzung i aus der momentanen Lage der Winkelhebels 54 bzw. der Hebelarme 60, 62 der Winkelhebel 54 ergibt. Damit erfolgt im Feststellbremsfall, in welchem die Federspeicherbremskammer 42 entlüftet und dadurch der Federspeicherbremskolben 36 durch die Wirkung der Speicherfedern 34 von der in Fig.2 gezeigten Lösestellung in die in Fig.4 gezeigte Zuspannstellung gedrängt wird, die Krafteinleitung vom Federspeicherbremskolben 36 in die an diesem angelenkten Zuglaschen 64, welcher ihrerseits wiederum an dem einem Hebelarm 60 eines Winkelhebels 54 angelenkt sind, über die beiden Winkelhebel 54 in den Druckring 50, wobei die Winkelhebel 54 dadurch einerseits mitgezogen und andererseits verdreht werden, wobei sie die Reaktionskräfte an der festen Stützfläche 56 abstützen. Je nach Drehstellung der Winkelhebel 54 besitzen die Hebelarme 60, 62 der Winkelhebel 54 eine andere wirksame Hebellänge a bzw. b in Bezug zu den Mittelachsen der Lagerzapfen 58 des Druckrings 50, wie ein Vergleich von Fig.2 (Lösestellung) mit Fig.4 (Zuspannstellung) anschaulich zeigt.

Mit anderen Worten ändern sich die für das Drehmoment wirksamen Hebellängen a bzw. b an den Hebelarmen 60, 62 der Winkelhebel 54 abhängig von der jeweiligen Drehstellung der Winkelhebel 54, welche wiederum vom Hub des Federspeicherbremskolbens 36 abhängig ist. Damit ändert sich aber auch die Übersetzung i des durch die Winkelhebel 54 gebildeten Hebelgetriebes 44 abhängig vom Hub des Federspeicherbremskolbens 36 im vorliegenden Fall derart, dass die Kraftübersetzung i zunimmt, d.h., dass ein relativ großer Weg des Federspeicherbremskolbens 36 bei einer relativ kleinen Federkraft der Speicherfedern 34 in einen kleinen Weg des Spindeljochs 16 mit einer relativ großen Spreizkraft für die Bremszange 1 übersetzt wird. Der Fachmann wählt dabei die Geometrie, insbesondere die Länge der Hebelarme 60, 62 der Winkelhebel 54 derart, dass die Kraftübersetzung i aufgrund der Winkelhebel 54 mit größer werdendem Drehwinkel bzw. mit größer werdendem Hub des Federspeicherbremskolbens 36 ansteigt, wie die Kurve in Fig.6 veranschaulicht.

Wenn also der Federspeicherbremszylinder 30 zum Zuspannen der Feststellbremse entlüftet wird, so stützt sich die Federkraft der Speicherfedern 34 über den Federspeicherbremskolben 36 und die Zuglaschen 64 an jeweils dem einem Hebelarm 60 der beiden Winkelhebel 54 ab. Die am Druckring 50 drehbar gelagerten Winkelhebel 54 stützen sich dabei mit der Stützrolle 66 des jeweils anderen Hebelarms 62 an der Stützfläche 56 der Trennwand 40 ab. Die Summe $F_D$ aus der Federkraft $F_{Feder}$ und der Rollenkraft $F_R$ wird dabei in axialer Richtung auf den Druckring 50, die Spindel 46 und das Betriebsbremskolbenrohr 22 auf das Spindeljoch 16 übertragen.

Mit fortschreitendem Hub des Federspeicherbremskolbens 36 und damit einhergehender Verdrehung der Winkelhebel 54 steigt die wirksame Übersetzung i der Winkelhebel 54. Bei geeigneter Wahl der Längen der Hebelarme 60, 62 bzw. der Winkel zwischen den Hebelarmen 60, 62 bzw. der Längen der Zuglaschen 64 und/oder der Lage deren Anlenkung am Federspeicherbremskolben 36 wird die Reduktion der Federkraft der Speicherfedern 34 über dem Hub des Federspeicherbremskolbens 36 durch die größer werdende Übersetzung i kompensiert, so dass sich etwa ein Verlauf der am Spindeljoch 16 wirksamen Bremskraft gemäß Fig.6 ergibt, welcher über dem Hub s des Federspeicherbremskolbens 36 annähernd konstant ist.

Durch die beiden winkelig am Federspeicherbremskolben 36 angreifenden Zuglaschen 64 wird sowohl in den Federspeicherbremskolben 36 als auch in den Druckring 50 ein Drehmoment um die Mittelachse 32 des Kombizylinders 12 eingeleitet. Dieses Drehmoment wird durch die in den Kulissen 70 geführten Gleitkörper 68 des Druckrings 50 im Federspeicherbremskolben 36 abgestützt, welcher wiederum durch die Führungsbolzen 72 im Federspeicherbremszylinder 30 drehfest gehalten ist (Fig.2).

Die vom Federspeicherbremskolben 36 erzeugte Feststellbremskraft wird folglich über die Winkelhebel 54 als Getriebe 44 in den Druckring 50 eingeleitet und dadurch verstärkt. Vom Druckring 50 wird diese verstärkte Kraft über das sperrbare Gewinde 52 in die Spindel 46 und von dort über das Axialdrucklager 48 in das Betriebsbremskolbenrohr 22 und das Spindeljoch 16 eingeleitet, dessen daraufhin in Fig.2 oder Fig.4 nach links gerichteter Hub letztlich diese Kraft in eine Drehung der Bremszangenhebel 2, 4 umsetzt.

Steht zum Lösen der Feststellbremse keine Druckluft zur Verfügung, beispielsweise wegen eines Defekts oder einer Leckage im Druckluftsystem, so kann sie durch manuelles Betätigen der Notlöseeinrichtung 76 gelöst werden. Dazu wird durch Drücken eines im Kombizylinder 12 vorzugsweise vertikal verschieblich gelagerten Druckstifts 78 eine am Druckring 50 um eine Achse parallel zur Mittelachse 32 des Kombizylinders 12 schwenkbare Klinke 80 aus einer Außenverzahnung 82 der Spindel 46 gehoben, wodurch die Drehsperre zwischen der Spindel 46 und dem Druckring 50 aufgehoben wird (Fig.3). Da das Gewinde 52 zwischen den genannten Teilen nicht selbsthemmend ist, verschraubt sich die Spindel 46 im Druckring 50, bis beide Teile axialkraftfrei sind und der Federspeicherbremskolben 36 am Boden des Federspeicherbremszylinders 30 anschlägt. Und auch der Betriebsbremskolben 20 kann, von der Rückholfeder 28 angetrieben, zusammen mit der Spindel 46 die Lösestellung einnehmen.

Die Klinke 80 wird in ausgehobener Stellung durch Einfallen eines Arretierungsstifts 84 gehalten (Fig.3). Erst wenn der Federspeicherbremskolben 36 durch Druckbeaufschlagung der Federspeicherbremskammer 42 in seine Lösestellung gedrängt wird und dabei den Druckring 50 mitnimmt, wird der Arretierungsstift 84 durch Anlage an der Trennwand 40 ausgehoben, wodurch die Klinke 80 wieder in die Außenverzahnung 82 der Spindel 46 eingreifen und dadurch die Drehsperre zwischen dieser und dem Druckring 50 wieder herstellen kann.

Innerhalb des Betriebsbremskolbenrohrs 22 ist ein Verschleißnachsteller untergebracht, der beispielsweise durch einen einseitig wirkenden Sprungsteller gebildet wird. Bei einer Betriebsbremsung wird die Betriebsbremskammer 24 belüftet, wodurch der Betriebsbremskolben 20 über die Betriebsbremskolbenstange 22 das Spindeljoch 16 und damit die Bremszange 1 betätigt.

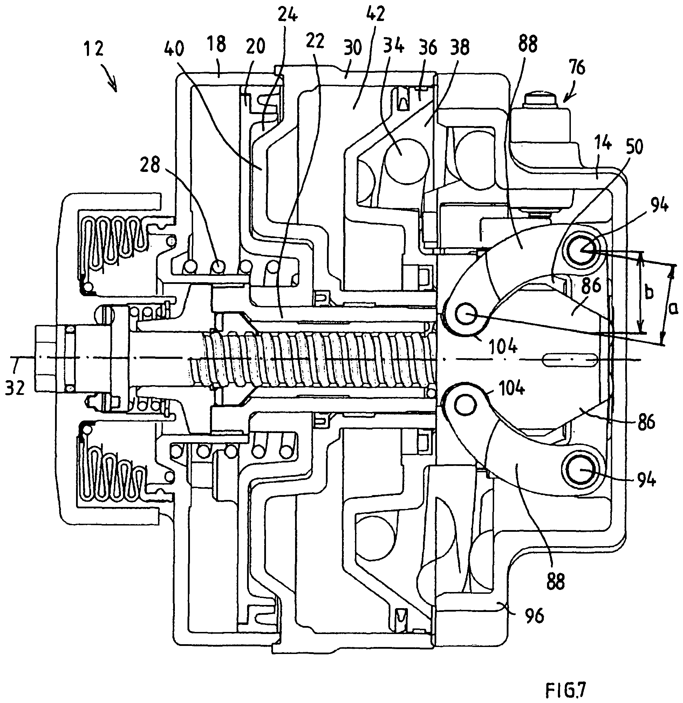

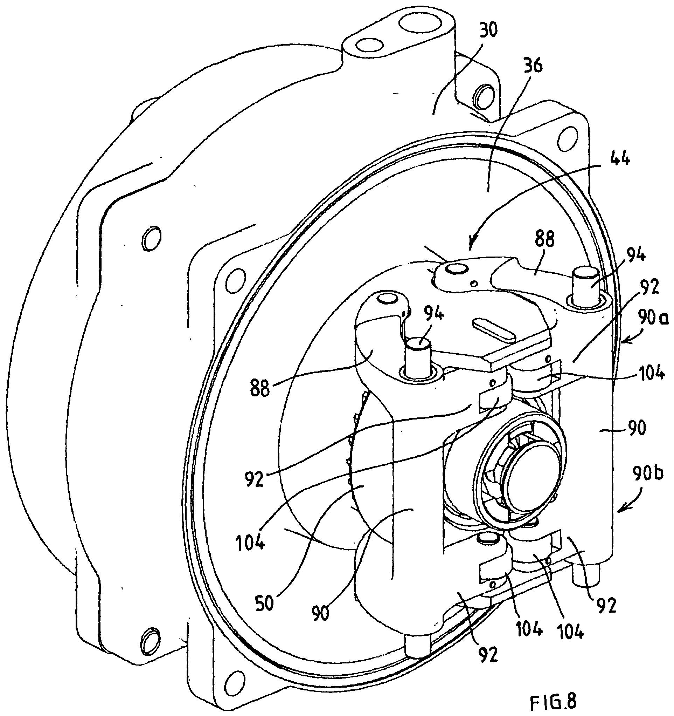

Bei dem zweiten Ausführungsbeispiel der Erfindung nach den Fig.7 bis 11 sind die gegenüber dem vorhergehenden Beispiel gleich bleibenden und gleich wirkenden Teile durch die gleichen Bezugszeichen gekennzeichnet. Im Unterschied zu diesem ist durch den Federspeicherbremskolben 36 wenigstens eine Keilkontur 86 parallel zur Mittelachse 32 des Kombizylinders 12 betätigbar, an welcher ein Hebelarm 88 wenigstens eines am Kombizylinder 12 drehbar gelagerten Hebels 90 entlang führbar ist, dessen anderer Hebelarm 92 sich am Druckring 50 abstützt, wobei ein Entlangführen des einen Hebelarms 88 des Hebels 90 an der Keilkontur 86 eine Drehbewegung des Hebels 90 um eine Hebeldrehachse 94 und damit durch den anderen Hebelarm 92 eine auf den Druckring wirkende, in Bezug zur Bewegung des Federspeicherbremskolbens 36 gleich gerichtete Axialkraft hervorruft, wie am besten Fig.8 veranschaulicht. Dabei ist beispielsweise die Hebeldrehachse 94 des Hebels 90 senkrecht zur Mittelachse 32 des Kombizylinders 12 angeordnet und beispielsweise im Zylinderdeckel 96 des Federspeicherbremszylinders 30 gelagert.

Bevorzugt sind zwei in Bezug zur Mittelachse 32 symmetrische Keilkonturen an zwei Keilplatten 86 vorgesehen, welche den Druckring 50 wenigstens teilweise umfassen und welche mit zwei, zur Mittelachse 32 des Kombizylinders 12 symmetrischen und jeweils zu einem Doppelhebel zusammengefassten Hebeln 90 zusammenwirken. Ein solcher Doppelhebel 90 beinhaltet folglich einen oberen Hebel 90a und einen unteren Hebel 90b mit je einem an der betreffenden Keilkontur 86 geführten Hebelarm 88 und mit je einem an einer Stützfläche des Druckrings 50 geführten Hebelarm 92 (Fig.8).

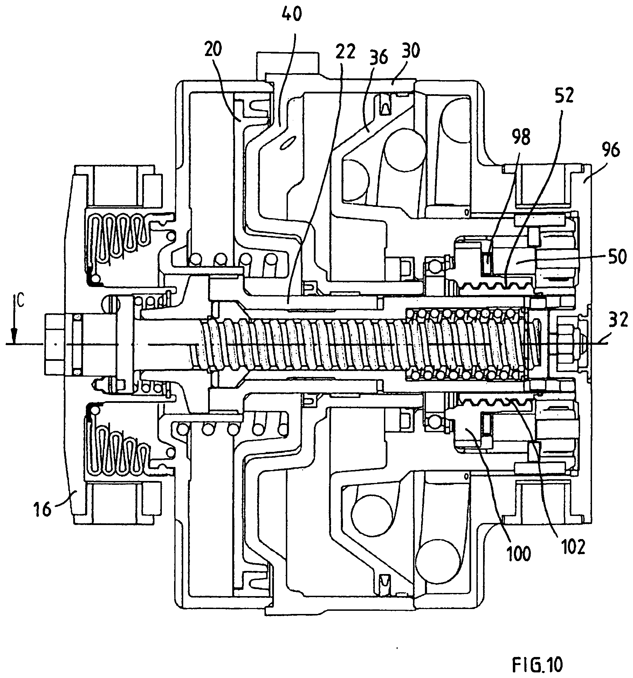

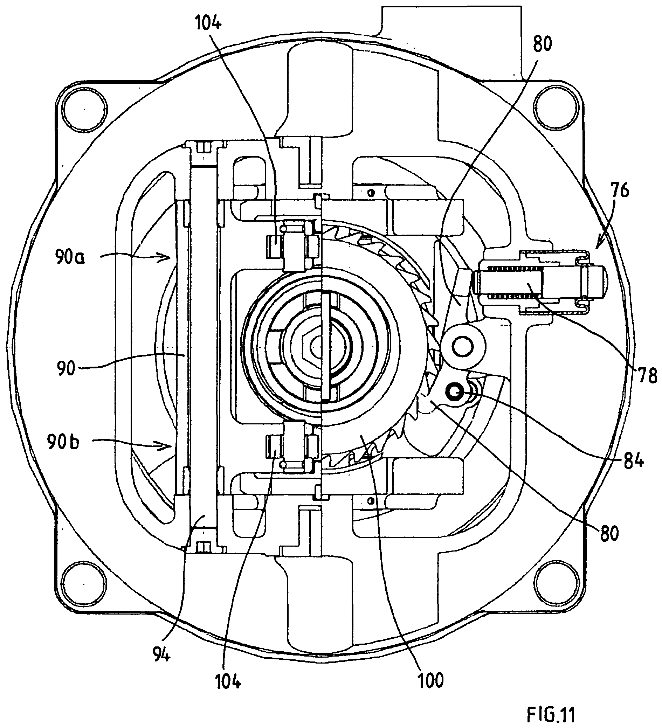

Bei dieser Variante überträgt der Druckring 50 die Axialkraft beispielsweise über ein Axialdrucklager 98 auf ein drehbares Teil eines Spindeltriebs in Form eines Zahnrads 100, welches auf einem drehfesten Teil 102 des Spindeltriebs durch das nicht selbst hemmende Gewinde 52 um eine mit der Mittelachse 32 koaxiale Achse drehbar ist (Fig.10). In die Außenverzahnung 82 des Zahnrads 100 ist wiederum die Klinke 80 der Drehsperre 74 der Notlöseeinrichtung 76 eingreifbar, die im Zylinderdeckel 96 drehbar gelagert ist (Fig.11). Das drehfeste Teil 102 des Spindeltriebs kann dann die Axialkraft auf die Betriebsbremskolbenstange 22 übertragen.

Wie insbesondere aus Fig.11 hervorgeht, ist die Klinke 80 als ein um eine Drehachse 104 parallel zur Mittelachse 32 drehbarer Kipphebel ausgebildet, welcher einendseitig in die Außenverzahnung 82 des Zahnrads 100 eingreifbar und welcher anderendseitig durch den federvorgespannten, manuell betätigbaren, durch eine Durchgangsbohrung aus dem Gehäuse 14 ein Stück weit heraus ragenden Druckstift 78 beaufschlagbar ist, um abhängig von der Lage des Druckstifts 78 das Zahnrad 100 mit dem Gehäuse 14 des Kombizylinders 12 drehfest zu verbinden oder um diese Verbindung zu lösen, um eine freie Drehbarkeit des Zahnrads 100 auf dem drehfesten Teil 102 des Spindeltriebs zu ermöglichen.

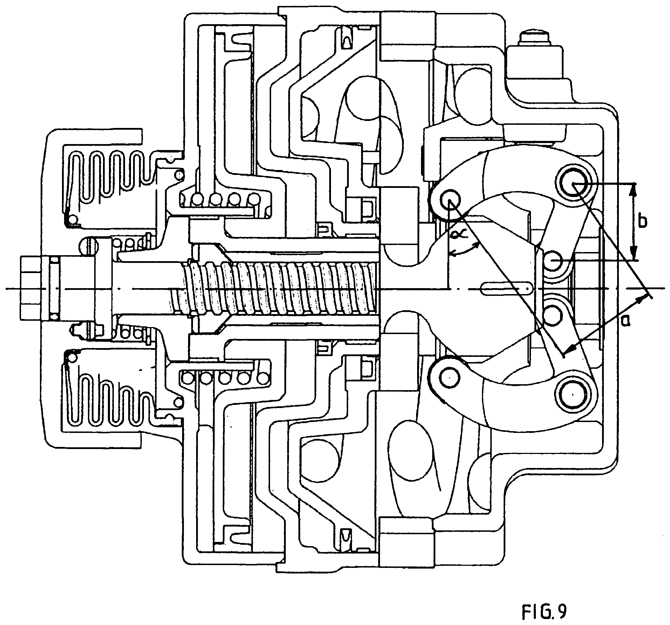

Wenn sich folglich der Federspeicherbremszylinder 30 ausgehend von der in Fig.7 gezeigten Lösestellung im Festbremsfall in die in Fig.9 gezeigte Zuspannstellung bewegt, so werden die beiden Keilkonturen 86 mitbewegt, wodurch die einen Hebelarme 88 der Doppelhebel 90 an den Keilkonturen 86 entlangbewegt werden und damit eine Drehbewegung der Doppelhebel 90 auslösen, wodurch die anderen Hebelarme 92 den Druckring 50 in eine in Bezug zur Bewegung des Federspeicherbremskolbens 36 gleich gerichtete Axialbewegung versetzen, wie am besten Fig.8 zeigt. Endseitig sind die anderen Hebelarme 92 der Doppelhebel 90 beispielsweise mit Rollen 104 versehen, um ein Abrollen auf den Keilkonturen 86 bzw. auf dem Druckring 50 zu ermöglichen.

Das Übersetzungsverhältnis i ergibt sich aus den Längen a und b der Hebelarme 88, 92 der Drehhebel 90 und dem vom Hub des Federspeicherbremszylinders 30 abhängigen Keilwinkel $\alpha$ der Keilkonturen 86 im jeweiligen Berührpunkt der Rollen 104 (vgl. Fig.7 und Fig.9):

$$i = \frac{a}{b \cdot \sin \alpha}$$

Der drehfest im Kombizylinder 12 gelagerte Druckring 50 überträgt dann die auf ihn wirkende Axialkraft durch das Axialdrucklager 98 auf das Zahnrad 100, welches aber im normalen Betrieb durch die Drehsperre 74 an der Drehung gegenüber dem drehfesten Teil 102 gehindert ist. Vom drehfesten Teil 102 des Spindeltriebs wird die Axialkraft dann auf die Betriebsbremskolbenstange 22 übertragen.

Im Normalbetrieb ist der Druckstift 78 der Drehsperre 74 durch eine Feder nach außen belastet, so dass die Klinke 80 in die Außenverzahnung 82 des Zahnrads 100 eingreift und dessen Drehung verhindert (Fig. 11). Wenn zum Notlösen der Feststellbremse der Druckstift 78 der Drehsperre 74 dann durch Drücken betätigt wird kippt die Klinke 80 um die Drehachse, wodurch sie einendseitig mit der Außenverzahnung 82 des Zahnrads 100 außer Eingriff gerät. Dies bewirkt, dass sich das Zahnrad 100 gegenüber dem drehfesten Teil 102 des Spindeltriebs über das nicht selbsthemmende Gewinde 52 frei drehen kann bis beide Teile zueinander kraftfrei sind. Dabei bewegt sich der Federspeicherbremskolben 36 bis zum Anschlag am Boden des Federspeicherbremszylinders 30 und der Betriebsbremskolben 20 kann sich, von der Rückholfeder 28 getrieben, zusammen mit der Spindel 46 in die in Fig.7 gezeigte Lösestellung bewegen.

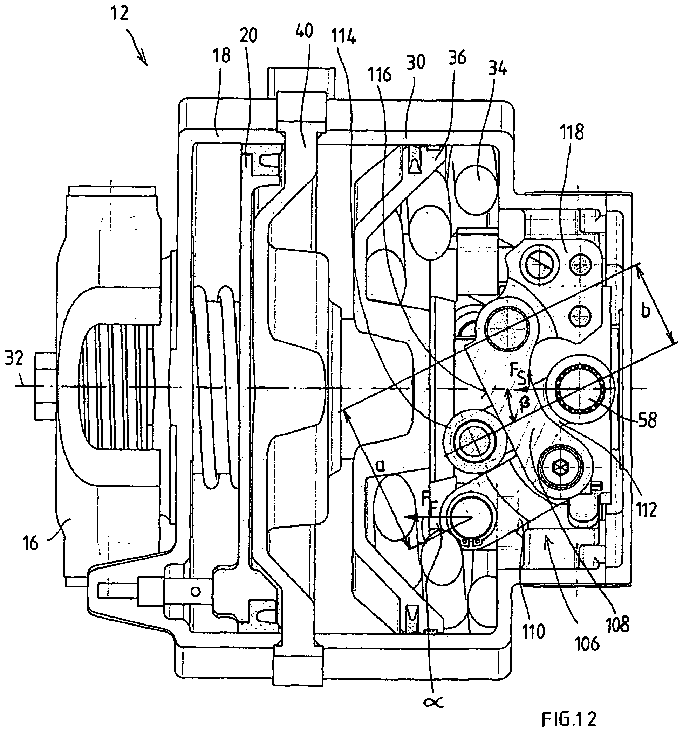

Bei dem dritten Ausführungsbeispiel der Erfindung nach den Fig.12 bis 15 sind die gegenüber den vorhergehenden Beispielen gleich bleibenden und gleich wirkenden Teile durch die gleichen Bezugszeichen gekennzeichnet.

Wie bei den anderen Ausführungsbeispielen werden der Federspeicherbremszylinder 30 und der Betriebsbremszylinder 18 koaxial angeordnet. Als Speicherfeder 34 ist beispielsweise eine Kegelfeder vorgesehen, die durch einen ringförmigen Federspeicherbremskolben 36 gespannt wird.

Zwischen dem Federspeicherbremskolben 36 und der Betriebsbremskolbenstange 22 des Betriebsbremszylinders 18 sind zwei Kulissenmechanismen 106 punktsymmetrisch oder in Bezug zu einer die Mittelachse 32 des Kombizylinders 12 enthaltenden Ebene zueinander umgeschlagen angeordnet, welche die Kraft der Speicherfeder 34 auf die Betriebsbremskolbenstange 22 des Betriebsbremszylinders 18 übertragen. Ein solcher Kulissenmechanismus 106 besteht im wesentlichen aus einem Kulissenhebel 108, dessen eines Ende drehbar am Zylindergehäuse 14 gelagert und dessen anderes Ende über eine Zuglasche 110 am Federspeicherbremskolben 36 angelenkt ist sowie aus einer Rollenlasche 112, die an einem Ende drehbar am Druckring 50 gelagert ist und die am anderen Ende eine Stützrolle 114 trägt, die im Eingriff mit einer Kulissenfläche 116 des Kulissenhebels 108 steht.

Wenn der Federspeicherbremskolben 36 einen Hub ausführt, so dreht sich der Kulissenhebel 108 um seinen Lagerpunkt an einem Lagerbock 118 im Zylindergehäuse. Durch die Drehung des Kulissenhebels 108 verändert sich der Winkel zwischen der Rollenlasche 112 und der Kulissenfläche 116, der sich normalerweise auf 90 Grad einstellt. Die Rollenlasche 112 dreht sich daraufhin selbstständig soweit, bis die Kraftwirkungslinie wieder senkrecht auf die Tangente der Kulissenfläche 116 im Berührpunkt der Stützrolle 114 steht. Dadurch verändern sich die wirksamen Hebelarme und folglich auch die Übersetzung.

Durch eine geeignete Wahl der Kulissengeometrie, der Position der Lagerpunkte und der Hebel- und Laschenlängen kann eine über dem Kolbenhub des Federspeicherbremskolbens 36 ansteigende Übersetzung erzielt werden, durch die der Kraftabfall der Speicherfeder 34 über dem Hub kompensiert bzw. wenigstens reduziert wird.

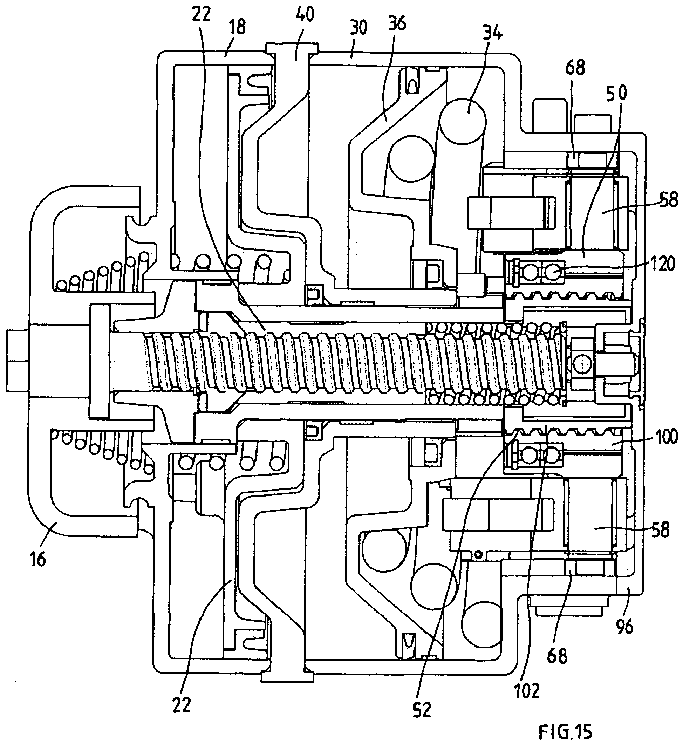

Wie bei den anderen Ausführungsbeispielen, besteht das Zylindergehäuse 14. des Kombizylinders 1 im wesentlichen aus drei Teilen, die vorzugsweise miteinander verschraubt sind. Der Betriebsbremszylinder 18 ist in der linken Zylinderhälfte platziert (Fig. 15), der Federspeicherbremszylinder 30 ist in der rechten Hälfte angeordnet und wird durch den Zylinderdeckel 96 verschlossen. Durch den Zylinderdeckel 96 wird die Montierbarkeit des Federspeicherspeicherbremszylinders 30 gewährleistet.

Der ringförmige Betriebsbremskolben 20 ist fest mit dem Betriebsbremskolbenrohr 22 verbunden, beispielsweise durch einen druckdichten Presssitz und wird am Außendurchmesser durch eine Aufpressmanschette und am Innendurchmesser durch einen Wellendichtring zwischen Zylinderboden und Betriebsbremskolbenrohr 22 abgedichtet. Der Betriebsbremskolben 20 ist durch wenigstens einen Führungsbolzen relativ zum Gehäuse gegen Verdrehen gesichert.

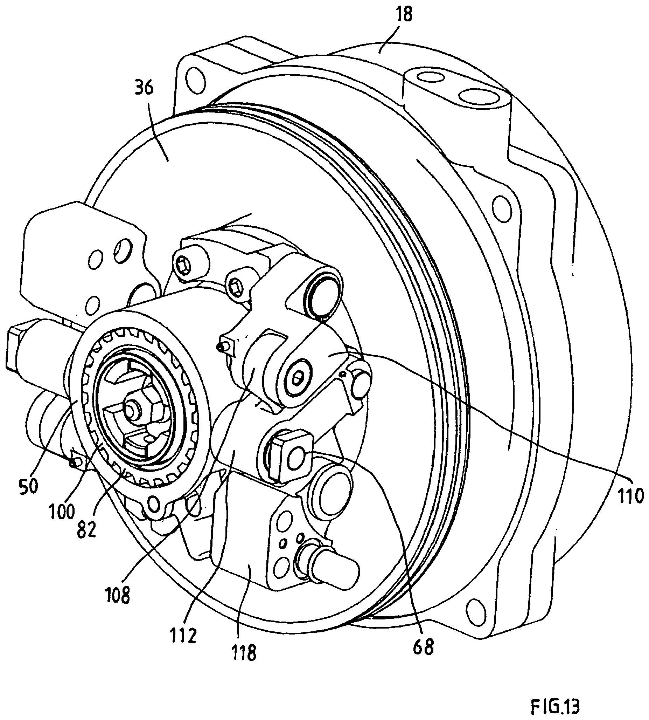

Das Betriebsbremskolbenrohr 22 ist zum einen im Betriebsbremszylinder 18 und zum anderen in der Trennwand 40 geführt. Der Federspeicherbremszylinder 30 beinhaltet eine äußere Dichtfläche für den als Ringkolben ausgebildeten Federspeicherbremskolben 36 und hat Führungsflächen für Gleitsteine 68 des Druckrings 50, die wiederum an den Enden von zwei senkrecht zur Mittelachse 32 weg ragenden Lagerzapfen 58 des Druckrings 50 gehalten sind (Fig.13). In der Trennwand 40 sind in den Schnittdarstellungen nicht sichtbare Luftanschlüsse für die Federspeicherbremskammer 42 und die Betriebsbremskammer 24 ausgebildet. Der Federspeicherbremskolben 36 ist mit Dichtungen am Innen- und Außendurchmesser versehen. Mit dem Federspeicherbremskolben 36 beispielsweise verschraubt sind Lagerzapfen für die an ihn angelenkten Zuglaschen 110, wobei deren Drehachsen senkrecht zur Mittelachse 32 des Kombizylinders 1 angeordnet sind. Die Speicherfeder 34, die hier beispielsweise als Kegelfeder ausgeführt ist, stützt sich einerseits am Zylindergehäuse 14 und andererseits am Federspeicherbremskolben 36 ab.

Die Kulissenhebel 108 sind einerseits über die Zuglaschen 110 am Federspeicherbremskolben 36 angelenkt und andererseits in den mit dem Zylindergehäuse 14 fest verschraubten Lagerböcken 118 drehbar gelagert. Die an den Lagerzapfen 58 des Druckrings 50 um eine Achse senkrecht zur Mittelachse 32 des Kombizylinders 12 gelagerten Rollenlaschen 112 weisen an ihrem von den Lagerzapfen 58 weg weisenden Enden die Stützrollen 114 auf, welche schließlich die Kraft von den Kulissenhebeln 108 in den Druckring 50 einleiten.

An dem Druckring 50 ist die Klinke 80 der Drehsperre 74 der Notlöseeinrichtung 76 gelagert (Fig.13). Die Notlöseeinrichtung 76 beinhaltet wiederum ein nicht selbsthemmendes Gewinde 52 zum mechanischen Abbau der Parkbremskraft, wenn zum Spannen der Speicherfeder 34 keine Druckluft zur Verfügung steht und besteht weiterhin aus dem durch das nicht selbsthemmende Gewinde 52 auf dem drehfesten Teil 102 des Spindeltriebs verschraubbare Zahnrad 100, welches mittels beispielsweise zweier Wälzlager 120 im Druckring 50 drehbar gelagert ist, dem drehfesten Teil 102 des Spindeltriebs, der über zwei Klauen in einen Schlitz des Betriebsbremskolbenrohrs 22 eingreift und damit zum einen drehfest mit diesem ist und zum anderen in Bremszuspannrichtung Axialkräfte auf das Betriebsbremskolbenrohr 22 übertragen kann, der Klinke 80, welche im Druckring 50 gelagert ist und mit dem Zahnrad 100 in Eingriff bringbar ist. Sie stützt das im nicht selbsthemmenden Gewinde 52 entstehende Drehmoment ab und leitet dieses auf den Druckring 50, welcher sich wiederum durch die Gleitsteine 68 in Kulissen des Zylindergehäuses 14 abstützt. Wie bei den anderen Ausführungsbeispielen wird bei einer Notlösebetätigung die Klinke 80 manuell aus der Außenverzahnung 82 des Zahnrads 100 gehoben.

Zum pneumatischen Lösen des Federspeicherbremszylinders 30 (Fig.12) wird die Federspeicherbremskammer 42 mit Druck beaufschlagt, so dass die Speicherfeder 34 vom Federspeicherbremskolben 36 vorgespannt wird.

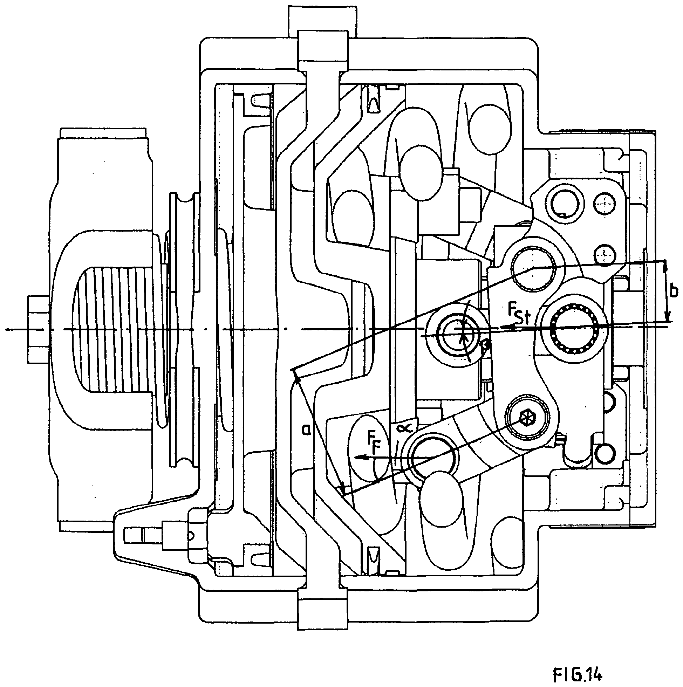

Zum Zuspannen der Federspeicherbremse (Fig.14) wird die Federspeicherbremskammer 42 entlüftet, so dass sich die Federkraft der Speicherfeder 34 über die beiden Zuglaschen 110, die Kulissenhebel 108 und die Rollenlaschen 112 auf den Druckring 50 abstützt. Dieser leitet die Kraft über die Notlöseeinrichtung 76 an das Betriebsbremskolbenrohr 22 und von dort auf das Spindeljoch 16. Dabei stellen sich die beiden Rollenlaschen 112 automatisch auf die vom Kolbenhub abhängige Winkellage der Kulissenhebel 108 ein. Sie nehmen die Position ein, bei der die Kraftwirkungslinie der Rollenlaschen 112 senkrecht zur Tangente der Kulissenflächen 116 im jeweiligen Berührpunkt der Stützrollen 114 steht. Mit anderen Worten liegen dann der Lagerpunkt der Rollenlasche 112, der Mittelpunkt der Stützrolle 114 und der Berührpunkt der Stützrolle 114 mit der Kulissenfläche 116 auf einer Geraden.

Bei der hier dargestellten Ausführungsform ist die Kulissenfläche 116, auf welcher die Stützrolle 114 abrollt, eben. Abhängig vom gewünschten Übersetzungsverhältnis ist jedoch auch beispielsweise eine konkave oder konvexe Kulissenfläche 116 denkbar. Bei einer konvexen Fläche darf der Krümmungsradius jedoch nicht kleiner werden als die Länge der Rollenlasche 112, damit sich ein stabiles Gleichgewicht einstellen kann.

Das vom Hub des Federspeicherbremskolbens 36 abhängige Übersetzungsverhältnis i lässt sich aus den Längen a und b der wirksamen Hebelarme und den Winkeln $\alpha$ und $\beta$ berechnen (Fig.12 und Fig.14):

$$i = \frac{a \cdot \cos \beta}{b \cdot \cos \alpha}$$

Die Kraft $F_{St}$ auf den Druckring 50 bzw. auf das Spindeljoch 16 ergibt sich damit zu:

$$F_{St} = i \cdot F_F$$

Wenn zum Lösen der zugespannten Federspeicherbremse keine Druckluft zur Verfügung steht, beispielsweise infolge von Leckage, so kann die Federspeicherbremse durch manuelles Betätigen der Notlöseeinrichtung 76 gelöst werden. Dazu wird durch Drücken der Notlösebetätigung die im Druckring 50 gelagerte Klinke 80 aus der Verzahnung 82 des Zahnrads 100 gedrückt, wodurch die Verdrehsicherung zwischen dem drehfesten Teil 102 des Spindeltriebs und dem Zahnrad 100 aufgehoben ist. Da das Gewinde 52 zwischen den beiden Teilen nicht selbsthemmend ist, verschraubt sich das Zahnrad 100 auf dem drehfesten Teil 102 bis beide Teile zueinander kraftfrei sind. Dabei geht der Federspeicherbremskolben 36 in Lösestellung und auch der Betriebsbremskolben 20 kann, von der Rückholfeder 28 angetrieben, zusammen mit dem drehfesten Teil 102 seinerseits die Lösestellung einnehmen.

Bezugszahlenliste

| | |
|---|---|
| 1 | Bremszange |
| 2 | Bremszangenhebel |
| 4 | Bremszangenhebel |
| 6 | Zugstange |
| 8 | Bremsbacken |
| 10 | Bremsscheibe |
| 12 | Kombizylinder |
| 14 | Gehäuse |
| 16 | Spindeljoch |
| 18 | Betriebsbremszylinder |
| 20 | Betriebsbremskolben |
| 22 | Betriebsbremskolbenstange |
| 24 | Betriebsbremskammer |
| 26 | Bolzen |
| 28 | Rückholfeder |
| 30 | Federspeicherbremszylinder |
| 32 | Mittelachse |
| 34 | Speicherfeder |
| 36 | Federspeicherbremskolben |
| 38 | Federkammer |
| 40 | Trennwand |
| 42 | Federspeicherbremskammer |
| 44 | Getriebe |
| 46 | Spindel |
| 48 | Axialdrucklager |
| 50 | Druckring |
| 52 | Gewinde |
| 54 | Winkelhebel |
| 56 | Stützfläche |
| 58 | Lagerzapfen |
| 60 | Hebelarm |
| 62 | Hebelarm |
| 64 | Zuglasche |
| 66 | Stützrolle |
| 68 | Gleitkörper |
| 70 | Kulissen |
| 72 | Führungsbolzen |
| 74 | Drehsperre |
| 76 | Notlöseeinrichtung |
| 78 | Druckstift |
| 80 | Klinke |
| 82 | Außenverzahnung |
| 84 | Arretierungsstift |
| 86 | Keilkontur |
| 88 | Hebelarm |
| 90 | Hebel |
| 90 a | oberer Hebel |
| 90 b | unterer Hebel |
| 92 | Hebelarm |
| 94 | Hebeldrehachse |
| 96 | Zylinderdeckel |
| 98 | Axialdrucklager |
| 100 | drehbares Teil des Spindeltriebs |
| 102 | drehfestes Teil des Spindeltriebs |
| 104 | Rollen |
| 106 | Kulissenmechanismus |
| 108 | Kulissenhebel |
| 110 | Zuglasche |
| 112 | Rollenlasche |
| 114 | Stützrolle |
| 116 | Kulissenfläche |
| 118 | Lagerbock |
| 120 | Wälzlager |

**Patentansprüche**

1. Kombizylinder (12) beinhaltend einen Betriebsbremszylinder (18) als aktive Betriebsbremse mit wenigstens einem druckmittelbetätigten Betriebsbremskolben (20), welcher über eine Betriebsbremskolbenstange (22) einen Bremsmechanismus (1) betätigt, sowie einen Federspeicherbremszylinder (30) als passive Feststellbremse mit einem gegen die Wirkung wenigstens einer Speicherfeder (34) druckmittelbetätigten Federspeicherbremskolben (36), wobei der Federspeicherbremskolben (36) im Feststellbremsfall die Kraft der wenigstens einen Speicherfeder (34) auf die Betriebsbremskolbenstange (22) überträgt, **dadurch gekennzeichnet, dass**

    a) die vom Federspeicherbremskolben (36) erzeugte Feststellbremskraft in einen drehfest gelagerten, koaxial zu einer Mittelachse (32) des Kombizylinders (12) betätigbaren Druckring (50) einleitbar ist, welcher Axialkräfte auf einen Spindeltrieb (46, 50; 100, 102) ausübt und eine Axialkraftübertragung zwischen dem Spindeltrieb (46, 50; 100, 102) und der Betriebsbremskolbenstange (22) vorgesehen ist, wobei

b) ein Teil (50; 102) des Spindeltriebs (46, 50; 100, 102) drehfest und ein anderes Teil (46; 100) des Spindeltriebs (46, 50; 100, 102) koaxial zu einer Mittelachse (32) des Kombizylinders (12) drehbar gelagert ist und die Drehbewegung des drehbaren Teils (46; 100) des Spindeltriebs (46, 50; 100, 102) mittels einer lösbaren Drehsperre (74) zur Axialkraftübertragung zwischen dem drehfesten Teil (50; 102) und dem drehbaren Teil (46; 100) sperrbar und zur Aufhebung dieser Axialkraftübertragung entsperrbar ist, und wobei

c) die Drehsperre (74) eine in eine Außenverzahnung (82) des drehbaren Teils (46; 100) des Spindeltriebs (46, 50; 100, 102) eingreifbare Klinke (80) beinhaltet, welche am Druckring (50) drehbar gelagert ist und die lösbare Drehsperre (74) von einer Notlöseeinrichtung (76) zum Notlösen der Feststellbremse umfasst ist, und

d) die lösbare Drehsperre (74) im Normalbetrieb gesperrt und zum Notlösen der Feststellbremse gelöst wird.

2. Kombizylinder nach Anspruch 1, **dadurch gekennzeichnet, dass** das Gewinde (52) zwischen dem drehbaren Teil (46; 100) und dem drehfesten Teil (50; 102) des Spindeltriebs (46, 50; 100, 102) ein nichtselbsthemmendes Gewinde ist.

3. Kombizylinder nach Anspruch 1 oder 2, **dadurch gekennzeichnet, dass** die Klinke (80) um eine Achse parallel zur Mittelachse (32) des Kombizylinders (12) schwenkbar ausgebildet und durch Drücken eines im Kombizylinder (12) verschieblich gelagerten Druckstifts (78) aus der Außenverzahnung (82) des drehbaren Teils (46; 100) des Spindeltriebs (46, 50; 100, 102) aushebbar ist.

4. Kombizylinder nach einem der vorhergehenden Ansprüche, **dadurch gekennzeichnet, dass** sich bei gelöster Drehsperre (74) zum Notlösen der Feststellbremse das drehbare Teil (46; 100) des Spindeltriebs (46, 50; 100, 102) gegenüber dem drehfesten Teil (50; 102) des Spindeltriebs (46, 50; 100, 102) über das Gewinde (52) verschraubt, wobei sich der Federspeicherbremskolben (36) bis zu einem Anschlag an einem Boden des Federspeicherbremszylinders (30) und der Betriebsbremskolben (20) von einer Rückholfeder (28) getrieben sich zusammen mit dem drehbaren Teil (46; 100) des Spindeltriebs (46, 50; 100, 102) in eine Lösestellung bewegt.

5. Kombizylinder nach einem der vorhergehenden Ansprüche, **dadurch gekennzeichnet, dass** beim Notlösen der Feststellbremse die Klinke (80) durch Einfallen eines Arretierungsstifts (84) in ausgehobener Stellung haltbar ist.

6. Kombizylinder nach Anspruch 5, **dadurch gekennzeichnet, dass** durch Druckbeaufschlagung einer Federspeicherbremskammer (42) der Federspeicherbremskolben (36) in Lösestellung drängbar ist, wobei der Druckring (50) mitgenommen und der Arretierungsstift (84) ausgehoben wird, wodurch die Klinke (80) in die Außenverzahnung (82) des drehbaren Teils (100) des Spindeltriebs (100, 102) eingreift und dadurch die Drehsperre (74) sperrt.

7. Kombizylinder nach einem der vorhergehenden Ansprüche, **dadurch gekennzeichnet, dass** der Druckring (50) die Axialkraft über ein Axialdrucklager (98) auf ein das drehbare Teil des Spindeltriebs (100, 102) bildendes Zahnrad (100) überträgt, in dessen Verzahnung (82) die handbetätigte Klinke (80) der Drehsperre (74) eingreifbar ist, wobei das Zahnrad (100) auf dem drehfesten Teil (102) des Spindeltriebs (100, 102) über das Gewinde (52) drehbar gelagert ist, welches die Axialkraft auf die Betriebsbremskolbenstange (22) überträgt.

8. Kombizylinder nach einem der Ansprüche 1 bis 6, **dadurch gekennzeichnet, dass** der Druckring (50) und das drehfeste Teil (50) des Spindeltriebs (46, 50) zusammengefasst sind und die Drehsperre (74) zwischen dem Druckring (50) und dem drehbaren Teil (46) des Spindeltriebs (46, 50) angeordnet ist.

9. Kombizylinder nach einem der vorhergehenden Ansprüche, **dadurch gekennzeichnet, dass** die vom Federspeicherbremskolben (36) erzeugte Feststellbremskraft in den Druckring (50) mittels eines kraftübersetzenden Getriebes (44) einleitbar ist.

10. Kombizylinder nach Anspruch 9, **dadurch gekennzeichnet, dass** an dem Druckring (50) zwei in Bezug auf die Mittelachse (32) exzentrische Getriebe (44) derart vorgesehen sind, dass sich Drehmomente um eine Achse senkrecht zur Mittelachse (32) kompensieren.

11. Kombizylinder nach Anspruch 9 oder 10, **dadurch gekennzeichnet, dass** das kraftübersetzende Getriebe (44) derart ausgebildet ist, dass die Bewegungen des Federspeicherbremskolbens (36) und der Betriebsbremskolbenstange (22) koaxial sind und zur Realisierung einer annährend konstanten Speicherfederkraft an der Betriebsbremskolbenstange (22) über dem gesamten Hub des Federspeicherbremskolbens (36) die Kraftübersetzung mit steigendem Hub des Federspeicherbremskolbens (36) größer wird.

12. Kombizylinder nach Anspruch 11, **dadurch gekennzeichnet, dass** an dem Druckring (50) wenigstens ein senkrecht zur Mittelachse (32) des Kombizylinders (12) angeordneter Lagerzapfen (58) ausgebildet ist, an dem wenigstens ein Winkelhebel (54) schwenkbar gelagert ist, der mit seinem einen Ende am Federspeicherbremskolben (36) angelenkt und mit seinem anderen Ende an einer festen Stützfläche (56) des Kombizylinders (12) derart abgestützt ist, dass bei einer Betätigung des Federspeicherbremskolbens (36) im Festbremsfall eine Drehung des abgestützten Winkelhebels (54) um den Lagerzapfen (58) und damit eine gleichgerichtete Betätigung des Druckrings (50) ausgelöst wird.

13. Kombizylinder nach Anspruch 12, **dadurch gekennzeichnet, dass** zwei an sich senkrecht zur Mittelachse (32) des Kombizylinders (12) nach außen erstreckenden Lagerzapfen (58) des Druckrings (50) drehbar gelagerte Winkelhebel (54) vorgesehen sind, welche in Bezug zu einer die Mittelachse (32) des Kombizylinders (12) enthaltenden Ebene zueinander umgeschlagen angeordnet sind.

14. Kombizylinder nach Anspruch 13, **dadurch gekennzeichnet, dass** ein Hebelarm (60) des Winkelhebels (54) mittels einer doppelt angelenkten Zuglasche (64) mit dem Federspeicherbremskolben (36) verbunden ist.

15. Kombizylinder nach Anspruch 13 oder 14, **dadurch gekennzeichnet, dass** ein anderer Hebelarm (62) des Winkelhebels (54) mittels einer auf der festen Stützfläche (56) abrollbaren Stützrolle (66) abgestützt ist.

16. Kombizylinder nach Anspruch 15, **dadurch gekennzeichnet, dass** die Lagerzapfen (58) des Druckrings (50) endseitig Gleitkörper (68) tragen, welche in sich in Richtung der Mittelachse (32) des Kombizylinders (1) erstreckenden Kulissen drehfest geführt sind.

17. Kombizylinder nach Anspruch 16, **dadurch gekennzeichnet, dass** die Stützfläche (56) für den Winkelhebel (54) an einer Trennwand (40) zwischen dem Federspeicherbremszylinder (30) und dem Betriebsbremszylinder (18) ausgebildet ist.

18. Kombizylinder nach Anspruch 17, **dadurch gekennzeichnet, dass** die Trennwand (40) eine Stützfläche für die wenigstens eine Speicherfeder (34) des Federspeicherbremszylinders (30) bildet.

19. Kombizylinder nach einem der Ansprüche 1 bis 11, **dadurch gekennzeichnet, dass** durch den Federspeicherbremskolben (36) wenigstens eine Keilkontur (86) parallel zur Mittelachse (32) des Kombizylinders (12) betätigbar ist, an welcher ein Hebelarm (88) wenigstens eines am Kombizylinder (12) drehbar gelagerten Hebels (90) entlang führbar ist, dessen anderer Hebelarm (92) sich am Druckring (50) abstützt, wobei ein Entlangführen des einen Hebelarms (88) des Hebels (90) an der Keilkontur (86) eine Drehbewegung des Hebels (90) um eine Hebeldrehachse (94) und damit eine in Bezug zur Bewegung des Federspeicherbremszylinders (36) gleich gerichtete Axialkraft auf den Druckring (50) hervorruft.

20. Kombizylinder nach Anspruch 19, **dadurch gekennzeichnet, dass** die Hebeldrehachse (94) des Hebels (90) senkrecht zur Mittelachse (32) des Kombizylinders (12) angeordnet ist.

21. Kombizylinder nach Anspruch 19 oder 20, **dadurch gekennzeichnet, dass** zwei, den Druckring (50) in Richtung der Hebeldrehachse (94) des Hebels (90) gesehen wenigstens teilweise umgreifende Keilkonturen (86) vorgesehen sind, welche mit zwei, zur Mittelachse (32) des Kombizylinders (12) symmetrischen und zu einem Doppelhebel (90) zusammengefassten Hebeln zusammen wirken.

22. Kombizylinder nach einem der Ansprüche 1 bis 11, **dadurch gekennzeichnet, dass** ein Kulissenmechanismus beinhaltend wenigstens eine am Druckring (50) angelenkte Rollenlasche (112) mit wenigstens einer Kulissenführung vorgesehen ist, in welcher wenigstens ein Kulissenhebel (108) geführt ist, der einerseits am Gehäuse (14) des Kombizylinders (12) und andererseits an wenigstens einer am Federspeicherbremszylinder (36) angelenkten Zuglasche (110) angelenkt ist.

23. Kombizylinder nach Anspruch 22, **dadurch gekennzeichnet, dass** die Rollenlasche (112) an ihrem vom Druckring (50) weg weisenden Ende mit einer drehbaren Stützrolle (114) versehen ist, welche auf einer Kulissenfläche (116) des Kulissenhebels (108) abrollbar ist.

24. Kombizylinder nach Anspruch 22 oder 23, **dadurch gekennzeichnet, dass** der Druckring (50) durch wenigstens eine Gleitführung (68) unverdrehbar im Gehäuse (14) des Kombizylinders (1) gelagert ist.

25. Kombizylinder nach einem der Ansprüche 22 bis 24, **dadurch gekennzeichnet, dass** zwei Rollenlaschen (112) mit Kulissenführungen, zwei in den Kulissenführungen geführte Kulissenhebel (108) sowie zwei Zuglaschen (110) vorgesehen sind, welche in Bezug zu einer die Mittelachse (32) des Kombizylinders (12) enthaltenden Ebene zueinander umgeschlagen angeordnet sind.

26. Kombizylinder nach Anspruch 25, **dadurch gekennzeichnet, dass** der Druckring (50) zwei senkrecht zur Mittelachse (32) angeordnete Lagerzapfen (58) aufweist, welche je eine Lagerung für eine Rollenlasche (112) tragen.

27. Bremszangeneinheit (1) für eine Scheibenbremse eines Schienenfahrzeugs beinhaltend wenigstens einen Kombizylinder (12) nach einem der vorhergehenden Ansprüche.

**Claims**

1. A combination cylinder (12) containing a service brake cylinder (18) as an active service brake having at least one pressure-medium-actuated service brake piston (20), which actuates a brake mechanism (1) via a service brake piston rod (22), and also containing a spring brake cylinder (30) as a passive parking brake having a spring brake piston (36) actuated by pressure medium counter to the action of at least one accumulator spring (34), wherein the spring brake piston (36) transmits the force of the at least one accumulator spring (34) to the service brake piston rod (22) in the parking braking situation, **characterised in that**

    a) the parking brake force generated by the spring brake piston (36) can be introduced into a rotationally fixedly mounted thrust ring (50), which can be actuated coaxially with respect to a central axis (32) of the combination cylinder (12) and which exerts axial forces on a spindle drive (46, 50; 100, 102), and an axial force transmission is provided between the spindle drive (46, 50; 100, 102) and the service brake piston rod (22), wherein
    b) one part (50; 102) of the spindle drive (46, 50; 100, 102) is mounted in a rotationally fixed manner and another part (46; 100) of the spindle drive (46, 50; 100, 102) is rotatably mounted coaxially with respect to a central axis (32) of the combination cylinder (12), wherein it is possible for the rotational movement of the rotatable part (46; 100) of the spindle drive (46, 50; 100, 102) to be blocked by means of a releasable rotational lock (74) for axial force transmission between the rotationally fixed part (50; 102) and the rotatable part (46; 100) and to be unblocked in order to eliminate said axial force transmission, and wherein
    c) the rotational lock (74) contains a pawl (80), which can engage in an external toothing (82) of the rotatable part (46; 100) of the spindle drive (46, 50; 100, 102) and which is rotatably mounted on the thrust ring (50), and the releasable rotational lock (74) is part of an emergency release device (76) for the emergency release of the parking brake, and
    d) the releasable rotational lock (74) is blocked in normal operation and is released for the emergency release of the parking brake.

2. The combination cylinder according to claim 1, **characterised in that** the thread (52) between the rotatable part (46; 100) and the rotationally fixed part (50; 102) of the spindle drive (46, 50; 100, 102) is a non-self-locking thread.

3. The combination cylinder according to claim 1 or 2, **characterised in that** the pawl (80) is designed to be pivotable about an axis parallel to the central axis (32) of the combination cylinder (12), and can be lifted out of the external toothing (82) of the rotatable part (46; 100) of the spindle drive (46, 50; 100, 102) by pressing a pressure pin (78), which is movably mounted in the combination cylinder (12).

4. The combination cylinder according to one of the preceding claims, **characterised in that**, with the rotational lock (74) released for the emergency release of the parking brake, the rotatable part (46; 100) of the spindle drive (46, 50; 100, 102) is screwed relative to the rotationally fixed part (50; 102) of the spindle drive (46, 50; 100, 102) by means of the thread (52), wherein the spring brake piston (36) moves until it abuts against a base of the spring brake cylinder (30), and the service brake piston (20), driven by a restoring spring (28), moves together with the rotatable part (46; 100) of the spindle drive (46, 50; 100, 102) into a released position.

5. The combination cylinder according to one of the preceding claims, **characterised in that**, during the emergency release of the parking brake, the pawl (80) can be held in the lifted-out position by means of the engagement of a locking pin (84).

6. The combination cylinder according to claim 5, **characterised in that** the spring brake piston (36) can be forced into the release position by the pressurization of a spring brake chamber (42), wherein the thrust ring (50) is driven along and the locking pin (84) lifted out, as a result of which the pawl (80) engages in the external toothing (82) of the rotatable part (100) of the spindle drive (100, 102) and the rotational lock (74) thereby locks.

7. The combination cylinder according to one of the preceding claims, **characterised in that** the thrust ring (50) transmits the axial force via an axial thrust bearing (98) to a gearwheel (100) forming the rotatable part of the spindle drive (100, 102), in the toothing (82) of which the manually actuatable pawl (80) of the rotational lock (74) can engage, wherein the gearwheel (100) is rotatably mounted on the rotationally fixed part (102) of the spindle drive (100, 102) via the thread (52), which transmits the axial force to the service brake piston rod (22).

8. The combination cylinder according to one of claims 1 to 6, **characterised in that** the thrust ring (50) and the rotationally fixed part (50) of the spindle drive (46, 50) are combined and the rotational lock (74) is arranged between the thrust ring (50) and the rotatable part (46) of the spindle drive (46, 50).

9. The combination cylinder according to one of the preceding claims, **characterised in that** the parking brake force generated by the spring brake piston (36) can be introduced into the thrust ring (50) by means of a force-transmitting gearing (44).

10. The combination cylinder according to claim 9, **characterised in that** two gearings (44), which are eccentric in relation to the central axis (32), are provided on the thrust ring (50) such that torques about an axis perpendicular to the central axis (32) are compensated.

11. The combination cylinder according to claim 9 or 10, **characterised in that** the force-transmitting gearing (44) is designed such that the movements of the spring brake piston (36) and of the service brake piston rod (22) are coaxial and, in order to realise an approximately constant accumulator spring force on the service brake piston rod (22) over the entire stroke of the spring brake piston (36), the force transmission ratio becomes greater with progressive stroke of the spring brake piston (36).

12. The combination cylinder according to claim 11, **characterised in that** at least one bearing journal (58) which is arranged perpendicular to the central axis (32) of the combination cylinder (12) is formed on the thrust ring (50), on which bearing journal (58) at least one angled lever (54) is pivotably mounted and is connected in an articulated manner with its one end to the spring brake piston (36) and with its other end to a fixed support surface (56) of the combination cylinder (12) in such a way that, during an actuation of the spring brake piston (36) in the parking braking situation, a rotation of the supported angled lever (54) about the bearing journal (58) and therefore an actuation of the thrust ring (50) in the same direction are triggered.

13. The combination cylinder according to claim 12, **characterised in that** two angled levers (54) are provided, which are rotatably mounted on bearing journals (58) of the thrust ring (50), which extend outward perpendicular to the central axis (32) of the combination cylinder (12), the angled levers (54) being arranged shifted in relation to one another with respect to a plane containing the central axis (32) of the combination cylinder (12).

14. The combination cylinder according to claim 13, **characterised in that** a lever arm (60) of the angled lever (54) is connected to the spring brake piston (36) by means of a tension lug (64) with double articulation.

15. The combination cylinder according to claim 13 or 14, **characterised in that** another lever arm (62) of the angled lever (54) is supported by means of a support roller (66), which can roll on the fixed support surface (56).

16. The combination cylinder according to claim 15, **characterised in that** the bearing journals (58) of the thrust ring (50) bear sliding bodies (68) at the end sides, the sliding bodies (68) being guided in sliding-block guides that extend in the direction of the central axis (32) of the combination cylinder (1).

17. The combination cylinder according to claim 16, **characterised in that** the support surface (56) for the angled lever (54) is formed on a partition (40) between the spring brake cylinder (30) and the service brake cylinder (18).

18. The combination cylinder according to claim 17, **characterised in that** the partition (40) forms a support surface for the at least one accumulator spring (34) of the spring brake cylinder (30).

19. The combination cylinder according to one of claims 1 to 11, **characterised in that**, by means of the spring brake piston (36), at least one wedge contour (86) can be actuated parallel to the central axis (32) of the combination cylinder (12), along which wedge contour (86) a lever arm (88) of at least one lever (90) that is rotatably mounted on the combination cylinder (12) can be guided, and of which the other lever arm (92) is supported on the thrust ring (50), wherein a guidance of one lever arm (88) of the lever (90) along the wedge contour (86) causes a rotational movement of the lever (90) about a lever rotational axis (94) and therefore an axial force, in the same direction as the movement of the spring brake cylinder (36), onto the thrust ring (50).

20. The combination cylinder according to claim 19, **characterised in that** the lever rotational axis (94) of the lever (90) is arranged perpendicular to the central axis (32) of the combination cylinder (12).

21. The combination cylinder according to claim 19 or 20, **characterised in that** two wedge contours (86) are provided, which engage at least partially around the thrust ring (50) as viewed in the direction of the lever rotational axis (94) of the lever (90), the wedge contours (86) interacting with two levers which are symmetrical with respect to the central axis (32) of the combination cylinder (12) and are combined to form a double lever (90).

**22.** The combination cylinder according to one of claims 1 to 11, **characterised in that** a sliding-block guide mechanism containing at least one roller lug (112), which is connected in an articulated manner to the thrust ring (50), is provided with at least one sliding-block guide, in which at least one sliding-block guide lever (108) is guided, being connected in an articulated manner at one side to the housing (14) of the combination cylinder (12) and at the other side to at least one tension lug (110), which is connected in an articulated manner to the spring brake cylinder (36).

**23.** The combination cylinder according to claim 22, **characterised in that** the roller lug (112) is provided, on its end pointing away from the thrust ring (50), with a rotatable support roller (114), which can roll on a sliding-block guide surface (116) of the sliding-block guide lever (108).

**24.** The combination cylinder according to claim 22 or 23, **characterised in that** the thrust ring (50) is mounted in a non-rotatable manner in the housing (14) of the combination cylinder (1) by means of at least one sliding guide (68).

**25.** The combination cylinder according to one of claims 22 to 24, **characterised in that** two roller lugs (112) with sliding-block guides, two sliding-block guide levers (108) guided in the sliding-block guides and two tension lugs (110) are provided, which are arranged shifted in relation to one another with respect to a plane containing the central axis (32) of the combination cylinder (12).

**26.** The combination cylinder according to claim 25, **characterised in that** the thrust ring (50) has two bearing journals (58), which are arranged perpendicular to the central axis (32) and which bear in each case one bearing arrangement for a roller lug (112).

**27.** A brake calliper unit (1) for a disc brake of a rail vehicle containing at least one combination cylinder (12) according to one of the preceding claims.

**Revendications**

**1.** Cylindre (12) combiné, comportant un cylindre (18) de frein de service, comme frein de service actif, ayant au moins un piston (20) de frein de service, qui est actionné par un fluide comprimé et qui actionne un mécanisme (1) de frein par l'intermédiaire d'une tige (22) de piston de frein de service, ainsi qu'un cylindre (30) de frein à ressort accumulateur, comme frein de stationnement passif, ayant un piston (36) de frein à ressort accumulateur actionné par un fluide sous pression à l'encontre de l'effet d'au moins un ressort (34) accumulateur, le piston (36) de frein à ressort accumulateur transmettant, dans le cas d'un frein de stationnement, la force du au moins un ressort (34) accumulateur à la tige (22) de piston de frein de service, **caractérisé en ce que**

a) la force de frein de stationnement, produite par le piston (36) de frein à ressort accumulateur, peut être appliquée à un cône (50) de serrage, qui est monté fixe en rotation, qui peut être actionné coaxialement à un axe (32) médian du cylindre (12) combiné et qui applique des forces axiales à un entraînement (46, 50 ; 100, 102) à vis sans fin et il est prévu une transmission de force axiale entre l'entraînement (46, 50 ; 100, 102) à vis sans fin et la tige (22) de piston de frein de service, dans lequel

b) une partie (50 ; 102) de l'entraînement (46, 50 ; 100, 102) à vis sans fin est montée fixe en rotation et une autre partie (46 ; 100) de l'entraînement (46, 50 ; 100, 102) à vis sans fin est montée tournante coaxialement à un axe (32) médian du cylindre (12) combiné et le mouvement de rotation de la partie (46 ; 100) tournante de l'entraînement (46, 50 ; 100, 102) à vis sans fin peut être bloqué au moyen d'un blocage (74) en rotation déblocable pour la transmission de force axiale entre la partie (50 ; 102) fixe en rotation et la partie (46 ; 100) tournante et peut être débloqué pour faire cesser cette transmission de force axiale, et dans lequel

c) le blocage (74) en rotation comporte un cliquet (80) pouvant pénétrer dans une denture (82) extérieure de la partie (46 ; 100) tournante de l'entraînement (46, 50 ; 100, 102) à vis sans fin, cliquet qui est monté tournant sur le cône (50) de serrage et le blocage (74) en rotation déblocable comprend un dispositif (76) de desserrage d'urgence pour desserrer d'urgence le frein de stationnement et

d) le blocage (74) en rotation déblocable est bloqué en fonctionnement normal et est débloqué pour le desserrage d'urgence du frein de stationnement.

**2.** Cylindre combiné suivant la revendication 1, **caractérisé en ce que** le filetage (52), entre la partie (46 ; 100) tournante et la partie (50 ; 102) fixe en rotation de l'entraînement (46, 50 ; 100, 102) à vis sans fin, est un filetage qui n'est pas autobloquant.

**3.** Cylindre combiné suivant la revendication 1 ou 2, **caractérisé en ce que** le cliquet (80) est constitué pivotant autour d'un axe parallèle à l'axe (32) médian du cylindre (12) combiné et peut, par poussée d'une tige (78) d'application d'une pression, montée coulissante dans le cylindre (12) combiné, être sorti de la denture (82) extérieure de la partie (46 ; 100) tournante de l'entraînement (46, 50 ; 100, 102) à vis sans fin.

4. Cylindre combiné suivant l'une des revendications précédentes, **caractérisé en ce que**, lorsque le blocage (74) en rotation est débloqué pour le desserrage d'urgence du frein de stationnement, la partie (46 ; 100) tournante de l'entraînement (46, 50 ; 100, 102) à vis sans fin se visse par le filetage (52) par rapport à la partie (50 ; 102) fixe en rotation de l'entraînement (46, 50 ; 100, 102) à vis sans fin, le piston (36) de frein à ressort accumulateur se déplaçant jusqu'à une butée sur un fond du cylindre (30) de frein à ressort accumulateur et le piston (20) du frein de service, entraîné par un ressort (28) de rappel, venant dans une position de desserrage ensemble avec la partie (46 ; 100) tournante de l'entraînement (46, 50 ; 100, 102) à vis sans fin.

5. Cylindre combiné suivant l'une des revendications précédentes, **caractérisé en ce que**, lorsque le frein de stationnement est desserré d'urgence, le cliquet (80) peut, par entrée d'une tige (84) d'arrêt, être maintenu en position sortie.

6. Cylindre combiné suivant la revendication 5, **caractérisé en ce que**, par l'alimentation en pression d'une chambre (42) du frein à ressort accumulateur, le piston (36) de frein à ressort accumulateur peut être refoulé dans la position de desserrage, le cône (50) de serrage étant entraîné et la tige (84) d'arrêt étant soulevée, grâce à quoi le cliquet (80) pénètre dans la denture (82) extérieure de la partie (100) tournante de l'entraînement (100, 102) à vis sans fin et bloque ainsi le blocage (74) en rotation.

7. Cylindre combiné suivant l'une des revendications précédentes, **caractérisé en ce que** le cône (50) de serrage transmet la force axiale par l'intermédiaire d'un palier de pression axial à une roue (100) dentée formant la partie tournante de l'entraînement (100, 102) à vis sans fin, roue dans la denture (82) de laquelle le cliquet, actionné à la main, du blocage (74) en rotation peut pénétrer, la roue (100) dentée étant montée tournante par l'intermédiaire du filetage (52), qui transmet la force axiale à la tige (22) de piston de frein de service, sur la partie (102) fixe en rotation de l'entraînement (100, 102) à vis sans fin.

8. Cylindre combiné suivant l'une des revendications 1 à 6, **caractérisé en ce que** le cône (50) de serrage et la partie (50) fixe en rotation de l'entraînement (46, 50) à vis sans fin sont rassemblés et le blocage (74) en rotation est disposé entre le cône (50) de serrage et la partie (46) tournante de l'entraînement (46, 50) à vis sans fin.

9. Cylindre combiné suivant l'une des revendications précédentes, **caractérisé en ce que** la force de frein de stationnement, produite par le piston (36) de frein à ressort accumulateur, peut être appliquée au cône (50) de serrage au moyen d'une transmission (44) de démultiplication de force.

10. Cylindre combiné suivant la revendication 9, **caractérisé en ce qu'**il est prévu sur le cône (50) de serrage deux transmissions (44) excentrées par rapport à l'axe (32) médian, de manière à compenser des couples de rotation autour de l'axe perpendiculairement à l'axe (32) médian.

11. Cylindre combiné suivant la revendication 9 ou 10, **caractérisé en ce que** la transmission (44) de démultiplication de force est constituée de manière à ce que les déplacements du piston (36) de frein à ressort accumulateur et de la tige (22) de piston de frein de service soient coaxiaux et, pour réaliser une force de ressort accumulateur à peu près constante sur la tige (22) de piston de frein de service, sur toute la course du piston (36) de frein à ressort accumulateur, la démultiplication de force devient plus grande au fur et à mesure qu'augmente la course du piston (36) de frein à ressort accumulateur.

12. Cylindre combiné suivant la revendication 11, **caractérisé en ce que**, sur le cône (50) de serrage, est constitué au moins un tourillon (58), qui est disposé perpendiculairement à l'axe (32) médian du cylindre combiné et sur lequel est monté pivotant au moins un levier (54) coudé, articulé par l'une de ses extrémités au piston (36) de frein à ressort accumulateur et appuyé par son autre extrémité sur une surface (56) d'appui fixe du cylindre (12) combiné, de manière à ce que, lors d'un actionnement du piston (36) de frein à ressort accumulateur, dans le cas d'un freinage fixe, il est déclenché une rotation autour du tourillon (58) du levier (54) coudé appuyé et ainsi un actionnement dans le même sens du cône (50) de serrage.

13. Cylindre combiné suivant la revendication 12, **caractérisé en ce qu'**il est prévu deux leviers (54) coudés montés en soi tournant autour de tourillons (58), s'étendant vers l'extérieur perpendiculairement à l'axe (32) médian du cylindre (12) combiné, du cône (50) de serrage, qui sont disposés de manière inversée l'un par rapport à l'autre, par rapport à un plan passant par l'axe (32) médian du cylindre (12) combiné.

14. Cylindre combiné suivant la revendication 13, **caractérisé en ce qu'**un bras (60) du levier (54) coudé est relié au piston (36) de frein à ressort accumulateur au moyen d'un tirant (64) doublement articulé.

15. Cylindre combiné suivant la revendication 13 ou 14, **caractérisé en ce qu'**un autre bras (62) du levier (54) coudé est appuyé au moyen d'un galet (66) d'appui pouvant rouler sur la surface (56) d'appui fixe.

**16.** Cylindre combiné suivant la revendication 15, **caractérisé en ce que** les tourillons (58) du cône (50) de serrage portent des patins (68) du côté de l'extrémité, qui sont guidés de manière fixe en rotation dans des coulisses s'étendant dans la direction de l'axe (32) médian du cylindre (1) combiné.

**17.** Cylindre combiné suivant la revendication 16, **caractérisé en ce que** la surface (56) d'appui, pour le levier (54) coudé, est constituée sur une cloison (40) entre le cylindre (30) de frein à ressort accumulateur et le cylindre (18) de frein de service.

**18.** Cylindre combiné suivant la revendication 17, **caractérisé en ce que** la cloison (40) forme une surface d'appui pour le au moins un ressort (34) accumulateur du cylindre (30) de frein à ressort accumulateur.

**19.** Cylindre combiné suivant l'une des revendications 1 à 11, **caractérisé en ce que**, par le piston (36) de frein à ressort accumulateur, au moins un contour (86) cunéiforme peut être actionné parallèlement à l'axe (32) médian du cylindre (12) combiné, contour sur lequel un bras (88) d'au moins un levier (90), monté tournant sur le cylindre (12) combiné, peut être guidé, l'autre bras (92) du levier s'appuyant sur le cône (50) de serrage, un guidage de l'un des bras (88) du levier (90) sur le contour (86) cunéiforme provoquant un mouvement de rotation du levier (90) autour d'un axe (94) de rotation du levier et ainsi, sur le cône (50) de serrage, une force axiale dirigée pareillement au déplacement du cylindre (36) de frein à ressort accumulateur.

**20.** Cylindre combiné suivant la revendication 19, **caractérisé en ce que** l'axe (94) de rotation du levier (90) est disposé perpendiculairement à l'axe (32) médian du cylindre (12) combiné.

**21.** Cylindre combiné suivant la revendication 19 ou 20, **caractérisé en ce qu'**il est prévu deux contours (86) cunéiformes, qui, considéré dans la direction de l'axe (94) de rotation du levier (90), entourent au moins en partie le cône (50) de serrage et qui coopèrent avec deux leviers symétriques par rapport à l'axe (32) médian du cylindre (12) combiné et rassemblés en un levier (90) double.

**22.** Cylindre combiné suivant l'une des revendications 1 à 11, **caractérisé en ce qu'**il est prévu un mécanisme de coulisse comportant une patte (112) de galet, qui est articulée au cône (50) de serrage et qui a au moins un guidage de coulisse, dans lequel est guidé au moins un levier (108) de coulisse, articulé d'une part au corps (14) du cylindre (12) combiné et d'autre part à au moins un tirant (110) articulé au cylindre (36) de frein à ressort accumulateur.

**23.** Cylindre combiné suivant la revendication 22, **caractérisé en ce que** la patte (112) de galet est pourvue, à son extrémité éloignée du cône (50) de serrage, d'un galet (114) d'appui tournant, qui peut rouler sur une surface (116) de coulisse du levier (108) de coulisse.

**24.** Cylindre combiné suivant la revendication 22 ou 23, **caractérisé en ce que** le cône (50) de serrage est monté par au moins un guidage (68) glissant, sans possibilité de torsion, dans le corps (14) du cylindre (1) combiné.

**25.** Cylindre combiné suivant l'une des revendications 22 à 24, **caractérisé en ce qu'**il est prévu deux pattes (112) de galet ayant des guidages de coulisse, deux leviers (108) de coulisse guidés dans les guidages de coulisse ainsi que deux tirants (110), qui sont disposés en étant inversés l'un par rapport à l'autre par rapport à un plan passant par l'axe (32) médian du cylindre (12) combiné.

**26.** Cylindre combiné suivant la revendication 25, **caractérisé en ce que** le cône (50) de serrage a deux tourillons (58), qui sont disposés perpendiculairement à l'axe (32) médian et qui ont chacun un montage pour une patte (112) de galet.

**27.** Unité (1) d'étrier de frein pour un frein à disque d'un véhicule ferroviaire, comportant au moins un cylindre (12) combiné suivant l'une des revendications précédentes.

FIG.1

FIG.2

FIG.3

FIG.4

22

FIG.5

Zylinderkraft

Federkraft

Übersetzung i

Zylinderhub

s

EP 2 695 780 B1

FIG.6

FIG.7

FIG.8

FIG. 9

FIG.10

FIG.11

FIG.12

FIG.13

FIG.14

FIG.15

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0072404 B1
- EP 0944512 B1

- US 3994206 A